# EUROPÄISCHE PATENTSCHRIFT

(11) **EP 1 477 055 B1**
(45) Veröffentlichungstag und Bekanntmachung des Hinweises auf die Patenterteilung: **09.09.2009**
(21) Anmeldenummer: 04011548.7
(22) Anmeldetag: 14.05.2004
(51) Int. Cl.: A01D 34/86

(54) **Pfosten-Freimäher und Verfahren zum Einsatz des Freimähers**
Mowing device around posts and method for the use of the mowing device
Appareil de tonte autour de poteaux et méthode pour l'utilisation de l'appareil de tonte

(30) Priorität: 14.05.2003 DE 10321683
(43) Veröffentlichungstag der Anmeldung: 17.11.2004
(73) Patentinhaber: MULAG FAHRZEUGWERK Heinz Wössner GmbH & CO. KG, 77728 Oppenau (DE)
(72) Erfinder: Spinner, Herbert, 77728 Oppenau (DE)
(74) Vertreter: Alber, Norbert

(56) Entgegenhaltungen:
- US-A- 3 261 150
- US-A- 3 715 872
- US-A- 4 697 405

## Beschreibung

### I. Anwendungsgebiet

Die Erfindung betrifft einen Pfosten-Freimäher mit mindestens zwei Mähvorrichtungen sowie ein Randstreifen-Mähgerät, welches außer wenigstens einem normalen Mähkopf einen Pfosten-Freimäher umfasst.

### II. Technischer Hintergrund

Unter einem Pfosten-Freimäher wird ein Mähgerät verstanden, welches bei Mähen in Fahrtrichtung auch dabei mehr oder weniger häufig, insbesondere regelmäßig auftauchende Hindernisse, z. B. im Randbereich aufgestellte Straßen-Leitpfosten, selbsttätig und bis unmittelbar an das Hindernis heran, möglichst allseitig, freimäht.

Ein solcher Pfosten-Frei mäher ist prinzipiell aus der Patentanmeldung DE 101 22 407 A1 bereits bekannt.

Dabei wird ein in der Aufsicht konkav nach vorne offen gekrümmter, horizontal vom Arbeitsfahrzeug nach außen ragender Tragarm, der an seinem vordersten freien Ende ein um eine vertikale Achse rotierendes Messer oder einen Mähfaden trägt, so geführt, dass der Tragarm zwar von hinten an das Hindernis herangeführt wird, aufgrund der Krümmung die Mähvorrichtung jedoch zunächst den Bereich außen und vor dem Hindernis und danach durch Umlaufen des Hindernisses auf der Rückseite den Restbereich freimäht.

Da die Mähvorrichtung auf diese Art und Weise für ein vollständiges Freimähen 360 Grad des Umfanges des Hindernisses umlaufen muss, und dies aus Gründen der Funktionssicherheit nur mit einer bestimmten maximalen Umlaufgeschwindigkeit geschehen darf, ist hierdurch - sofern das Fortschreiten des Arbeitsfahrzeuges in Fahrtrichtung mit konstanter Geschwindigkeit erfolgen soll - diese konstante Arbeitsgeschwindigkeit sehr begrenzt.

Dies wirkt sich insbesondere dann nachteilig aus, wenn der Pfosten-Freimäher als eine Einheit innerhalb eines Randstreifen-Mähgerätes an einem Arbeitsfahrzeug montiert ist, welches den gesamten Randstreifen neben einer Straße, also sowohl innerhalb als auch außerhalb der z. B. Straßenleitpfosten liegend, mit möglichst großer Effizienz, also Fahrgeschwindigkeit, freimähen soll. Wenn dabei zusätzlich dieses Fahrzeug mit nur einem Bediener besetzt sein soll, der alle notwendigen Steuerungen für das Mähgerät bedienen soll, müssen diese möglichst stark miteinander verkoppelt sein, vor allem wenn es außer dem Pfosten-Freimäher noch zwei andere Mähköpfe umfaßt.

Zwar ist es bereits bekannt, diese Mähköpfe mit einer vor dem Mähwerk quer liegenden Taststange auszustatten, so dass diese Mähköpfe teilweise ebenfalls um das Hindernis herumgeführt werden, jedoch wird dadurch nie der vollständige Umfang des Hindernisses freigemäht, sondern maximal etwa 180°-270°.

Weiterhin sind aus der US 3261150-A sowie der US 4697405-A Pfostenfreimäher bekannt, bei denen die einzelnen Mähvorrichtungen jeweils am vorderen Ende von V-förmig auseinanderlaufenden Tragarmen angeordnet sind, die an ihrem hinteren Ende schwenkbar an einem Grundkörper fixiert sind. Jedoch befinden sich diese Mähvorrichtungen weder an einem gegenüber dem Trägerfahrzeug verschwenkbaren Auslegerarm, sodass dort immer die Gefahr besteht, dass das Hindernis die fix am Trägerfahrzeug positionierte Mähvorrichtung beschädigt.

Weiterhin zeigen sie keine Überlappung der Mähbereiche der einzelnen Mähvorrichtungen in Querrichtung und auch nicht das Abragen beider Tragarme quer zur Fahrtrichtung nach außen.

### III. Darstellung der Erfindung

### a) Technische Aufgabe

Es ist daher die Aufgabe gemäß der Erfindung, einen Pfosten-Freimäher bzw. ein einen solchen Freimäher umfassendes Randstreifen-Mähgerät sowie ein Verfahren zum Freimähen zu schaffen, welches trotz hoher Arbeitsgeschwindigkeit eine zuverlässige Funktion auch des Pfosten-Freimähers gewährleistet.

### b) Lösung der Aufgabe

Diese Aufgabe wird durch die Merkmale der Ansprüche 1, und 14 gelöst. Vorteilhafte Ausführungsformen ergeben sich aus den Unteransprüchen.

Dadurch, dass der Pfosten-Freimäher nicht nur eine, sondern mindestens zwei Mähvorrichtungen umfasst, muss der frei zu mähende Umfangsbereich, in der Regel die vollen 360°, um das Hindernis herum während der zur Verfügung stehenden Zeit, die ja von der Soll-Arbeitsgeschwindigkeit des Arbeitsfahrzeuges abhängt, nur teilweise bewältigt werden, wodurch die Umlaufgeschwindigkeit jeder Mähvorrichtung mindestens halbiert werden kann oder im Gegenzug die Geschwindigkeit des Arbeitsfahrzeuges erhöht werden kann.

Zusätzlich können die Komponenten, insbesondere die Tragarme, der Arbeitsvorrichtung einfacher und stabiler gestaltet werden.

Zu diesem Zweck sind die einzelnen Mähvorrichtungen vorzugsweise in der Aufsicht kreisförmige Mähvorrichtungen, bei denen ein Mähfaden oder ein Mähmesser um eine vertikale Achse rotiert, und auch die Erfassungsmittel für diese Mähvorrichtungen sind z. B. parallel, vorzugsweise darüber, zugeordnete

Tastscheiben, die wenigstens einen Segmentbereich, vorzugsweise den gesamten Umfangsbereich der kreisförmigen Mähvorrichtung, abdecken und in der Regel geringfügig radial nach außen über das Mähmittel vorstehen.

Die einzelnen Mähvorrichtungen werden dabei vorzugsweise automatisch während des Vorbeifahrens des Arbeitsfahrzeuges mittels der Verlagerungsvorrichtung so geführt, dass von den einzelnen Mähvorrichtungen unterschiedliche Umfangsbereiche des Hindernisses und in der Summe vorzugsweise der gesamte Umfangsbereich von 360° um das Hindernis herum freigemäht wird.

Zu diesem Zweck befinden sich die Mähvorrichtungen an den freien Enden jeweils eines Tragarmes, der um eine vertikale Achse schwenkbar an einem Tragmittel angeordnet ist und dadurch zwischen der normalen Mähstellung - ohne Kontakt mit einem Hindernis - und einer durch das Hindernis ausgelösten verschwenkten Mähstellung verschwenkbar ist.

In der normalen Mähstellung sind die Tragarme in eine definierte Schwenkstellung in Fahrtrichtung vorgespannt, vorzugsweise gegen einen Anschlag, und erstrecken sich quer, also schräg oder senkrecht stehend, zur Fahrtrichtung ihrer vertikalen Schwenkachse aus nach außen. Die einzelnen Tragarme sind dabei vorzugsweise unabhängig voneinander verschwenkbar, insbesondere jedoch um dieselbe vertikale Achse herum.

Um eine besonders einfache Konstruktion zu ermöglichen, sind die Tragarme einteilig, also nicht knickbar, ausgebildet und vor allem bei der ersten und zweiten Mähvorrichtung gerade verlaufend, so dass z. B. einfache Kastenprofile oder U-Profile für die Tragarme verwendet werden können, und zwar vorzugsweise mit flach liegendem Querschnitt:

Da auf der Unterseite des Tragarmes am freien Ende die Mähvorrichtung einschließlich der Tastscheibe angeordnet ist, und in oder auf dem Tragarm die Antriebsvorrichtung für die Mähvorrichtung, beispielsweise ein antreibender Keilriemen, wird durch ein flach liegendes Profil des Tragarmes eine niedrige Gesamtbauhöhe der Mähvorrichtung erreicht, was für das Hineinmähen unter Leitplanken und ähnliches in der Praxis von großer Bedeutung ist.

Bei zwei Mähvorrichtungen überlappen sich deren Mähbereiche sowohl in Fahrtrichtung als auch in Querrichtung hierzu geringfügig, wobei die weiter außen mähende Mähvorrichtung hinter der innen liegenden Mähvorrichtung positioniert ist, und vorzugsweise der Freiraum zwischen den beiden Mähvorrichtungen geringer ist als die Dicke des zu erwartenden Hindernisses.

Der Pfosten-Freimäher wird dabei so gesteuert, dass die weiter außen liegende Mähvorrichtung mit ihrer Tastscheibe oder einem anderen Erfassungsmittel gegen die Rückseite des Hindernisses läuft und das Hindernis den Tragarm dieser zweiten Mähvorrichtung nach hinten verschwenkt, so dass diese zweite Mähvorrichtung den Bereich hinter und seitlich innerhalb des Pfostens freimäht.

Da die weiter innen laufende erste Mähvorrichtung gegen die zweite Mähvorrichtung vorgespannt ist, umläuft im gleichen Zeitraum die erste Mähvorrichtung den Bereich seitlich vor und vor dem Pfosten bis über dessen Außenkante hinaus und zwar so lange, bis durch das Vorbeifahrens des Arbeitsfahrzeuges am Pfosten, dieser Pfosten die zweite Mähvorrichtung wieder freigibt und diese nach vorne zurückschwenkt.

Da es je nach Relation zwischen Durchmesser der Mähvorrichtungen und Dicke des Hindernisses bzw. Länge der Auslegerarme nicht sicher ist, dass auf diese Art und Weise auch der Bereich seitlich außerhalb des Pfostens vollständig freigemäht wird, kann der Pfosten-Freimäher zusätzlich eine dritte Mähvorrichtung an einem dritten Tragarm aufweisen, die in Fahrtrichtung vor den beiden anderen Mähvorrichtungen in der normalen Mähstellung läuft und seitlich außerhalb davon, in Querrichtung etwas überlappend mit der zweiten, also äußeren der beiden ersten, Mähvorrichtungen.

Diese dritte Mähvorrichtung, die von einem von schräg hinten, insbesondere schräg außen, und damit gekröpften dritten Tragarm gehalten wird, läuft also auf der Außenseite am Pfosten vorbei und mäht diesen Bereich frei, insbesondere bevor das Hindernis das Erfassungsmittel, beispielsweise die Tastscheibe, der beiden anderen Mähvorrichtungen überhaupt erreicht hat.

Spätestens zu diesem Zeitpunkt - gesteuert durch ein separates Tastmittel der dritten Mähvorrichtung - klappt die Mähvorrichtung aktiv nach hinten so weit weg, dass sie sich außerhalb des Wirkungsbereiches der ersten und zweiten Mähvorrichtung des Freimähers befindet und deren Umrundung des Hindernisses somit nicht einschränkt.

Nach Freiwerden der ersten und zweiten Mähvorrichtung vom Hindernis schwenkt die gesamte Einheit wieder in ihre normale Mähstellung zurück, also die Tragarme der ersten und zweiten Mähvorrichtung aufgrund deren Federvorspannung gegen ihre Anschläge, und die dritte Mähvorrichtung, indem die aktive Rückschwenkung aufgehoben wird oder durch aktiven Antrieb.

Auch der Tragarm der dritten Mähvorrichtung schwenkt dabei vorzugsweise um die gleiche Schwenkachse wie die Tragarme der ersten und zweiten Mähvorrichtungen, wobei die aktive Verschwenkung vorzugsweise mittels eines auf dieser Schwenkachse angeordneten Ritzels und einer damit kämmenden Zahnstange bewirkt wird, die mittels eines Antriebes, z. B. Pneumatik- oder Hydraulikzylinders in Längsrichtung hin- und herbewegt werden kann.

Dabei werden vorzugsweise alle drei rotierenden Mähvorrichtungen - die insbesondere hinsichtlich Funktion, aber auch hinsichtlich Durchmesser, Erfassungsmittel wie Tastscheibe usw. identisch ausgebildet sind - vorzugsweise von einem gemeinsamen Motor, z. B. einem Hydraulikmotor, angetrieben, der vorzugsweise auf der gemeinsamen Schwenkachse der drei Tragarme sitzt, wobei die Antriebsvermittlung von dort aus etwa über Keilriemen erfolgt, und insbesondere im Profil der Tragarme angeordnet sein können.

Zusätzlich ist an dem gekröpften aber nicht knickbaren dritten Tragarm auf der Innenseite dessen vorderen Segmentes eine Leitkurve zum Entlanggleiten des Hindernisses vorhanden, die knickfrei am vorderen Ende in die Außenkontur der Tastscheibe dieser dritten Mähvorrichtung übergeht. Bei einem nicht schnell genug reagierenden aktiven Verschwenken dieser dritten Mähvorrichtung wird ein passives Verschwenken dieses dritten Tragarmes nach hinten bewirkt durch den Druck des Hindernisses auf die Leitkurve so, dass kein Verhaken zwischen Hindernis und drittem Tragarm erfolgen kann.

Die Höhenlage des Pfosten-Freimähers wird vorzugsweise durch eine Gleitkufe, die auf dem Untergrund läuft, sichergestellt, wobei diese nicht mit dem vollen Gewicht des Pfosten-Freimähers auf den Untergrund drückt, sondern teilweise gewichtsentlastet ist durch einen vertikal, insbesondere zwischen dem Pfosten-Freimäher und dessen Freimäher-Tragarm montierten, vertikal wirkenden Hydraulikzylinder, der mit einem Druckspeicher gekoppelt ist, in dem mittels eines z. B. einstellbaren Druckhalteventils ein definierter Druck vorhanden ist, der auf den Hydraulikzylinder wirkt und dadurch die Teilentlastung sicherstellt.

Der Freimäher-Tragarm ist als ein- oder zweiteiliger Gelenkarm ausgebildet und mit einer Anfahrsicherung in Form z. B. wenigstens eines etwa parallel zum Arm angeordneten Hydraulikzylinders, der ebenso wie der Gelenkarmteil eines Gelenkdreiecks oder Gelenkvierecks ist.

Bei Fehlsteuerung des Pfosten-Freimähers, wenn also ein Hindernis gegen eine nicht vorgesehene Stelle des Freimähers läuft, führt dies zu einem zwangsweisen Auslenken des gesamten Freimähers um dessen Schwenkpunkt am vorderen Ende des Freimäher-Tragarmes herum oder auch zum unbeabsichtigten Verschwenken des Tragarmes gegenüber dessen Aufnahmepunkt, wobei je nach Anlaufstelle des Hindernisses die Schwenkrichtung des Tragarmes gegenüber dem Aufnahmepunkt in beide Richtungen weisen kann. Deshalb werden als Anlaufsicherung vorzugsweise zwei Rücken an Rücken befestigte Hydraulikzylinder verwendet, wobei in der Normalstellung beim einen der Kolben eingefahren und beim anderen ausgefahren ist, so dass ein doppelt wirkender, sowohl auf Druck als auch auf Zug belastbarer, Sicherheitszylinder entsteht.

Bei Integration des Pfosten-Freimähers in ein Mähgerät, welches ja üblicherweise einen oder mehrere Mähköpfe aufweist, die über Auslegerarme an einem Trägerfahrzeug, frontseitig oder heckseitig, befestigt sind, wird der Pfosten-Freimäher vorzugsweise im Frontbereich seitlich neben dem Trägerfahrzeug eingesetzt, um einen guten Einblick des in der Fahrerkabine sitzenden Bedieners sicherzustellen. In der Regel ist dann auch einer der Mähköpfe, vorzugsweise der innen, nahe am Fahrzeug laufende, erste Mähkopf, an der Fahrzeugfront, beispielsweise dessen Frontanbauschiene, montiert und in diesem Fall wird der Auslegerarm des Pfosten-Freimähers vorzugsweise direkt am Auslegerarm des ersten Mähkopfes befestigt.

Dies hat u. a. den Vorteil, dass bei Querverschiebung des Auslegerarmes des ersten Mähkopfes relativ entlang der Frontschiene der Pfosten-Freimäher zwangsweise mit verfahren wird.

Auch die hydraulische Ansteuerung, z. B. Verschwenken zwischen einer Transportstellung und einer Mähstellung, Absenken auf den Untergrund bzw. Abheben vom Untergrund kann zwar nach manueller Einstellung separat für den Mähkopf und den Freimäher geschehen, ist in der Regel jedoch durch eine gemeinsame, zentrale Steuerung auch zentral für beide Einheiten veranlaßt.

### c) Ausführungsbeispiele

Ausführungsformen gemäß der Erfindung sind im Folgenden beispielhaft näher beschrieben. Es zeigen:
- Fig. 1:: eine erste Ausführungsform des Pfosten-Freimähers in der Aufsicht in Grundstellung,
- Fig. 2:: den Freimäher der Fig. 1 in ausgelenkter Stellung,
- Fig. 3:: den Freimäher der Fig. 1 in annähernd maximal ausgelenkter Stellung,
- Fig. 4:: den Freimäher der Fig. 1-3 in Blickrichtung IV integriert in ein Mähgerät,

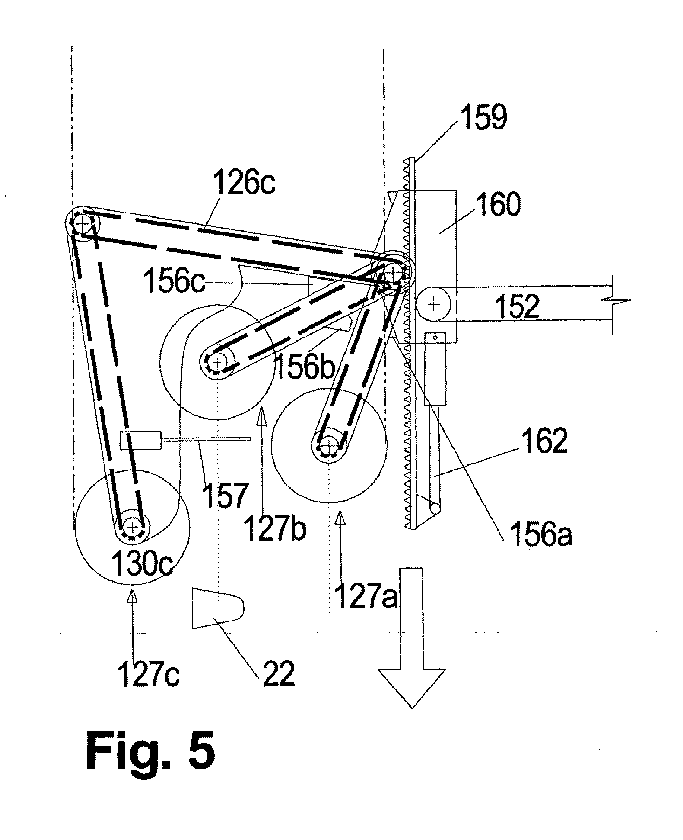

- Fig. 5:: eine zweite Bauform des Pfosten-Freimähers in der Aufsicht in der Grundstellung,
- Fig. 6:: den Freimäher der Fig. 5 in einer ausgelenkten Stellung,
- Fig. 7:: den Freimäher der Fig. 5 in der annähernd maximal ausgelenkten Stellung,
- Fig. 8:: ein Mähgerät mit integriertem Pfosten-Freimäher gemäß Fig. 5 in der Aufsicht in Mähstellung, und
- Fig. 9:: das Mähgerät gemäß Fig. 8 in der Transportstellung.

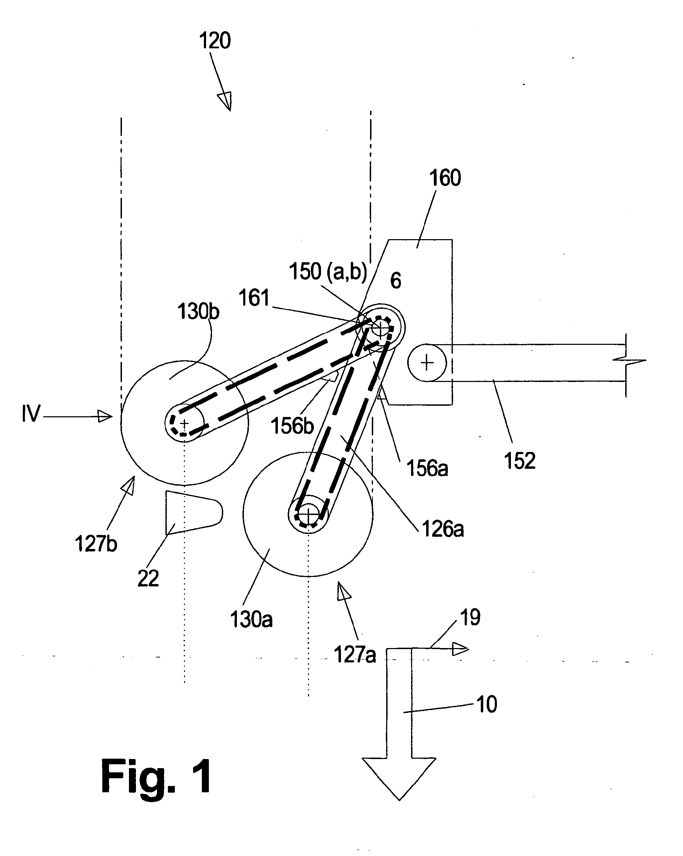

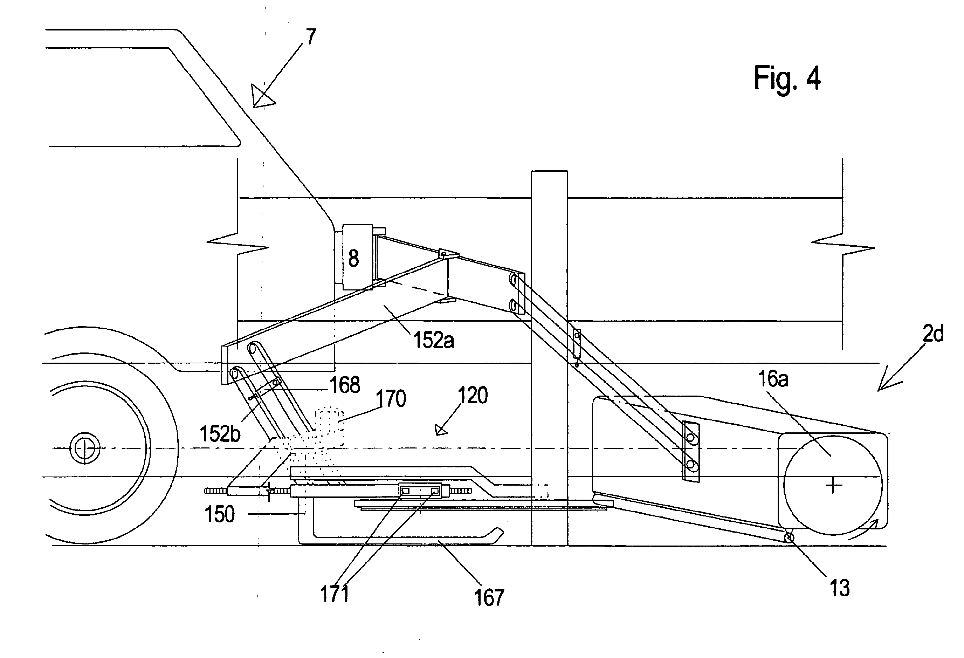

Fig. 1 zeigt den erfindungsgemäßen Pfosten-Freimäher 120, der an einem Freimäher-Auslegerarm 152 an einem in dieser Figur nicht (nur in den Figuren 4, 8 und 9) dargestellten Arbeitsfahrzeug 7 gehalten ist. Durch Bewegung des Arbeitsfahrzeuges wird der Pfosten-Freimäher 120 in Fahrtrichtung 10 gelenkt und soll den Umfangsbereich unmittelbar um ein Hindernis wie etwa einen Leitpfosten 22 herum so gut als möglich, vorzugsweise über die vollen 360° des Umfanges herum und bis an die Kontur des Hindernisses heran, freimähen.

Zu diesem Zweck sind wenigstens zwei Mähvorrichtungen 127a,b in Form von um eine vertikale Achse rotierenden Schneiden, z. B. einem Messer oder einem Mähfaden, am Grundkörper 160 des Freimähers 120 befestigt, indem sich diese Mähvorrichtungen 127a,b am freien Ende jeweils eines vorzugsweise geraden, horizontal z. B. schräg nach vorne verlaufenden Tragarmes 126a,b befinden, die schwenkbar um eine vertikale Schwenkachse 150 gegenüber dem Grundkörper 160 verschwenkbar sind.

Mittels z. B. Federkraft sind die Tragarme 126a,b dabei in die in Fig. 1 ersichtliche normale Mähstellung, also ohne Kontakt mit einem Hindernis, vorgespannt, und zwar der erste Tragarm 126a für die weiter innen am Trägerfahrzeug 7 laufende Mähvorrichtung 127a gegen einen Anschlag 156a gegenüber dem Grundkörper 160 und der zweite Tragarm 126b über einen zweiten Anschlag 156b gegenüber dem ersten Tragarm 126a.

In dieser normalen Mähstellung ist die Winkelstellung und Länge der Tragarme 126a,b so bemessen, dass bei geringfügiger Überlappung der Mähbereiche in Querrichtung 19 sich die erste Mähvorrichtung 127a vor der zweiten Mähvorrichtung 127b befindet, mit einer z. B. deutlichen Überlappung von bis zu 30% des Durchmessers der Mähvorrichtungen in Fahrtrichtung 10.

Der freie Abstand zwischen den beiden Mähvorrichtungen ist dabei geringer als die Dicke des zu erwartenden Hindernisses, z. B. des Leitpfostens 22.

Zu diesem Zweck wird der Freimäher 120 in Querrichtung 19 so positioniert, dass der Pfosten 22 gegen die Front des zweiten, etwas weiter hinten laufenden Mähvorrichtung 127b läuft, also an der oberhalb des horizontal umlaufenden Mähmessers vorzugsweise drehbar montierten Tastscheibe 130b anschlägt.

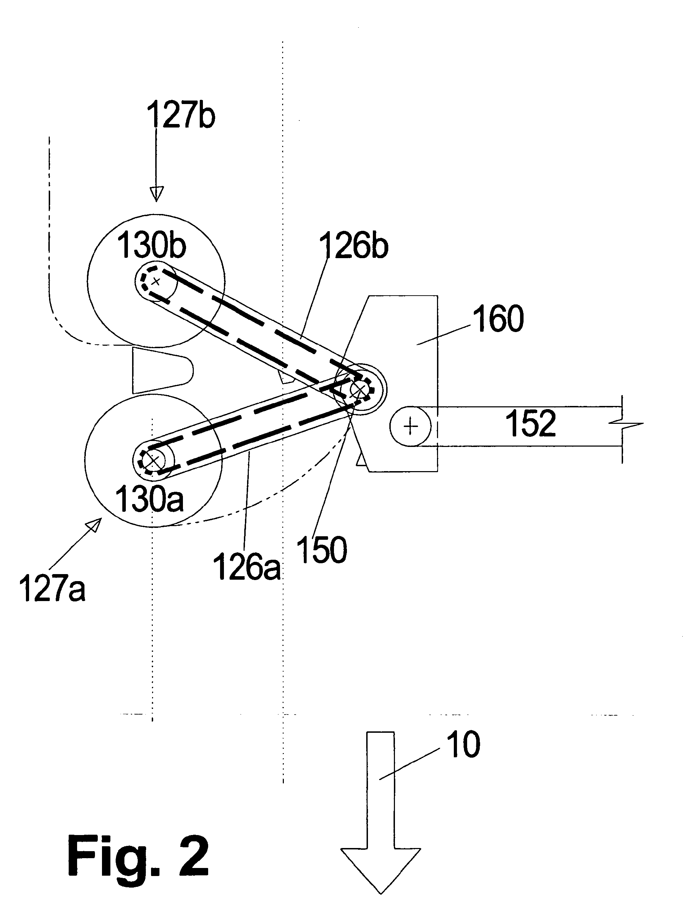

Der Widerstand des Pfostens 22 lenkt - wie in Fig. 2 zu erkennen - während der Weiterfahrt des Pfosten-Freimähers in Fahrtrichtung 10, die zweite Mähvorrichtung 127b hinten um die Rückseite des Pfostens 22 herum, wobei die Tastscheibe 130b in Anlage an der Außenkontur des Pfostens 22 bleibt, indem sich der hintere Tragarm 126b um seine Schwenkachse 150b, die sich mit dem Grundkörper 160 weiter in Fahrtrichtung 10 bewegt, nach hinten schwenkt.

Aufgrund der Federvorspannung der Tragarme 126a,b gegeneinander und aufgrund der Tatsache, dass der lichte Abstand zwischen den beiden Mähvorrichtung kleiner ist als die Dicke des Pfostens 22 liegt die Tastscheibe 130a der ersten Mähvorrichtung 127a an der Vorderseite der Kontur des Pfostens 22 an und wird an dieser entlang nach außen geführt.

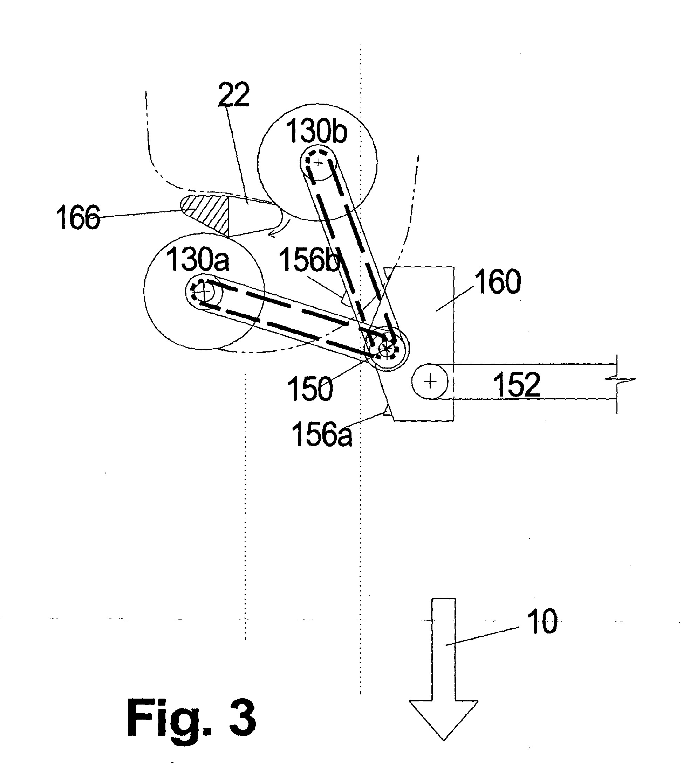

Dies läuft unter Weiterfahrt in Fahrtrichtung 10 so lange ab, bis - kurz nach dem in Fig. 3 dargestellten Zustand - die zweite Mähvorrichtung 102 außer Eingriff mit der rückseitigen Kontur des Pfostens 22 gerät und über dessen Innenkante entlang wieder nach vorne gleiten kann unter Verschwenken des Tragarmes 126b um seine Schwenkachse 150 nach vorne. Bei dieser Bewegung wird der erste Tragarm 126a mitgenommen aufgrund der Vorspannung der beiden Tragarme gegeneinander bis zum Anschlag 156b.

Wie Fig. 3 zeigt, kann je nach Größe und Kontur des Pfostens 22, insbesondere in Relation zu dem Durchmesser der Mähvorrichtungen 127a,b und Länge der Tragarme 126a,b eine ungemähte Restfläche 166 seitlich außerhalb des Pfostens 22 mit einer etwa dreieckigen Form verbleiben.

Um dies zuverlässig zu vermeiden, kann der Pfosten-Frei mäher eine dritte Mähvorrichtung 127c umfassen, die ebenfalls ein in der horizontalen rotierendes Messer oder Mähfaden umfasst, über der sich eine Tastscheibe 130c mit geringfügig größerem Durchmesser befindet. In der normalen Mähstellung läuft diese Mähvorrichtung 127c außerhalb der ersten und zweiten Mähvorrichtung 127a,b mit geringfügiger seitlicher Überlappung zur äußeren Mähvorrichtung 127b, und in Fahrtrichtung 10 vor der ersten und der zweiten Mähvorrichtung 127a,b, mit vorzugsweise geringfügiger Überlappung mit der vorderen der beiden, der Mähvorrichtung 127a, in Fahrtrichtung 10.

Zu diesem Zweck befindet sich diese dritte Mähvorrichtung 127c an einem gekröpften, aber vorzugsweise einteiligen nicht klappbaren Tragarm 126c, der V-förmig ausgebildet ist und sich mit seinem hinteren Ende ebenfalls um die vorzugsweise gleiche vertikale Schwenkachse 150 dreht wie die ersten beiden Tragarme, und dessen an die Mähvorrichtung 127c angrenzende Armteil von hinten außen gegen die Mähvorrichtung 127c ragt. Der Tragarm 127c ist dabei vorzugsweise wiederum mittels Federkraft entweder gegen den Tragarm 126b der zweiten Mähvorrichtung 127b oder gegen den Grundkörper 160 vorgespannt.

Die Überlappung der dritten Mähvorrichtung 127c zur zweiten Mähvorrichtung 127b in Querrichtung 19 ist dabei so groß, dass ein auf den Frontbereich der zweiten Mähvorrichtung 127c auftreffender Pfosten 22 zuvor möglichst nahe an der weiter vorne laufenden dritten Mähvorrichtung 127c vorbei läuft oder deren Tastscheibe 130c noch im vorne innen liegenden Bereich berührt und nach außen drückt. Dadurch wird der Bereich seitlich außerhalb des Pfostens 22 zuverlässig und von der zeitlichen Abfolge als erstes freigemäht, der bei nur zwei Mähvorrichtungen ungemäht verbleiben könnte, wie in Fig. 3 dargestellt.

Sobald dies geschehen ist, trifft der Pfosten 22 auf einen hinter der Mähvorrichtung 127c am Tragarm 126c befestigten, quer nach innen in Richtung Pfosten 22 vorstehenden Taststab 157, dessen Auslenkung bewirkt, dass der gesamte Tragarm 126c nach hinten verschwenkt wird um seine Schwenkachse 150, bis er sich auf der von den beiden ersten und zweiten Mähvorrichtungen 127a,b abgewandten Seite bezüglich des Grundkörpers 160 und damit der Schwenkachse 150 befindet.

Diese Verschwenken wird aktiv ausgelöst, indem ein mit dem Schwenkarm 126c auf dessen Schwenkachse 150 befestigtes Ritzel 161 in Drehung versetzt wird, in die relativ zum Grundkörper 160 eine Zahnstange 159, die mit dem Ritzel 161 in Eingriff steht, entlang bewegt wird mittels eines Pneumatik- oder Hydraulikkolbens 162, der zwischen dem Grundkörper 160 und der Zahnstange 159 ebenfalls etwa in dessen Längserstreckung verlaufend angeordnet ist.

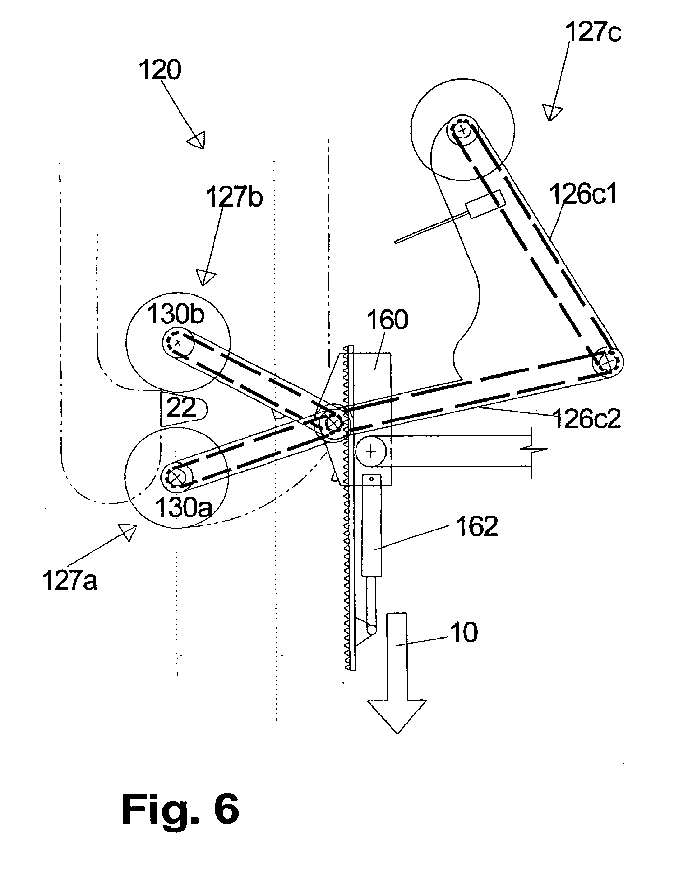

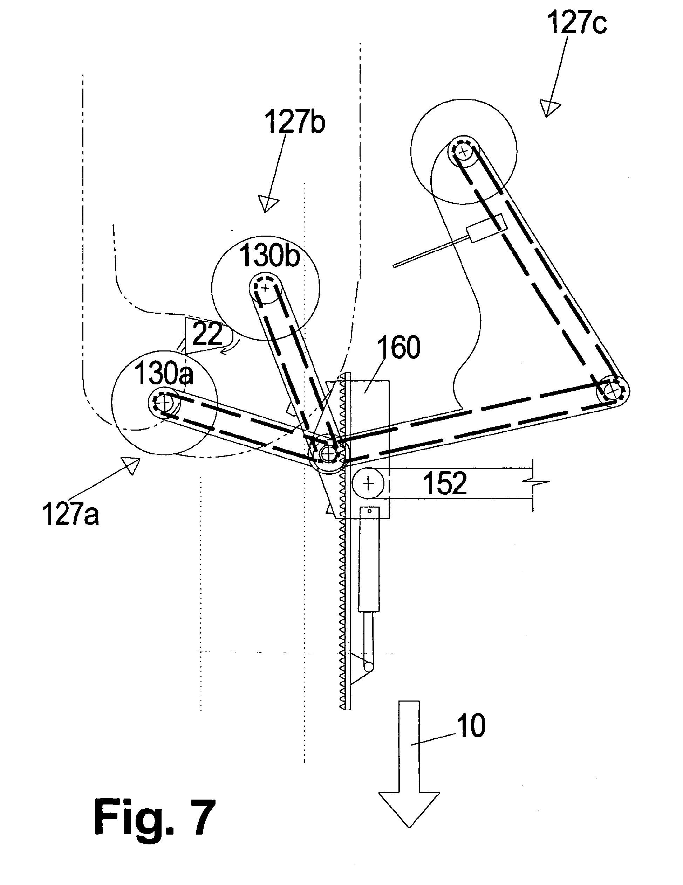

Dieses Verbringen in die deaktivierte Position ist zumindest begonnen, vorzugsweise beendet, bevor der Pfosten 22 die beiden anderen Mähvorrichtungen 127a,b bzw. deren Tastscheiben 130a,b reicht, also etwa in dem in Fig. 1 dargestellten Zustand. Anschließend läuft der anhand der Fig. 1 bis 3 beschriebene Bewegungsablauf mit den Mähvorrichtungen 127a,b und deren Tragarmen ab, wie in den Figuren 6 und 7 dargestellt.

Das Zurückschwenken in die normale Mähstellung erfolgt danach entweder nach federbedingtem Vorwärtsschwenken der beiden Tragarme 126a,b bzw. zeitversetzt danach durch aktive Betätigung des Hydraulikkolbens 162 in die Gegenrichtung, bis der Tragarm 126c dieser dritten Mähvorrichtung 127c mittels des Anschlages 156c an der Rückseite des zweiten Tragarmes 126b anliegt.

Die Fig. 4 sowie 8 und 9 zeigen die Integration des Pfosten-Freimähers 120 in ein Mähgerät, welches von einem Arbeitsfahrzeug 7 getragen wird.

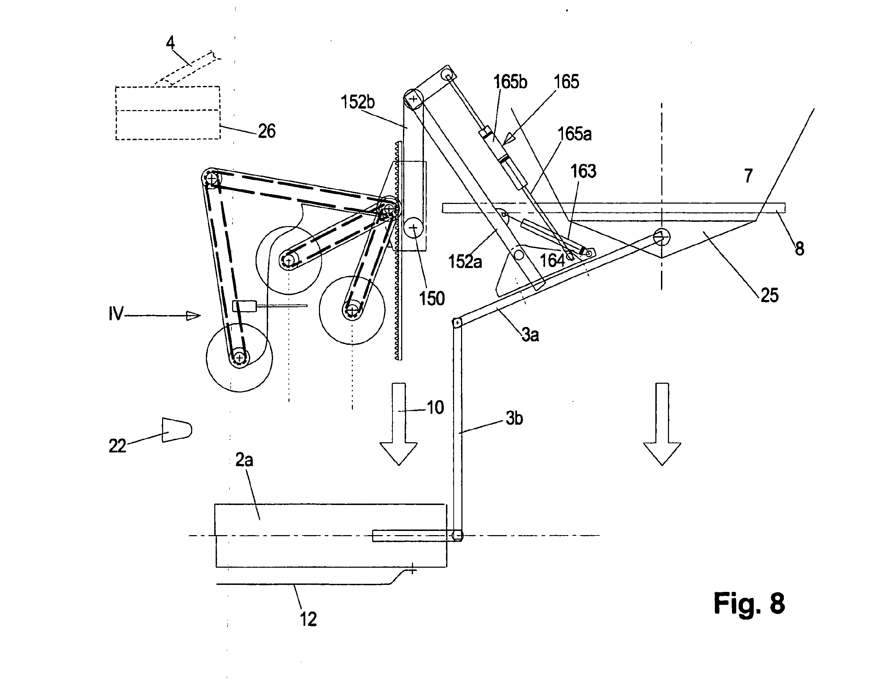

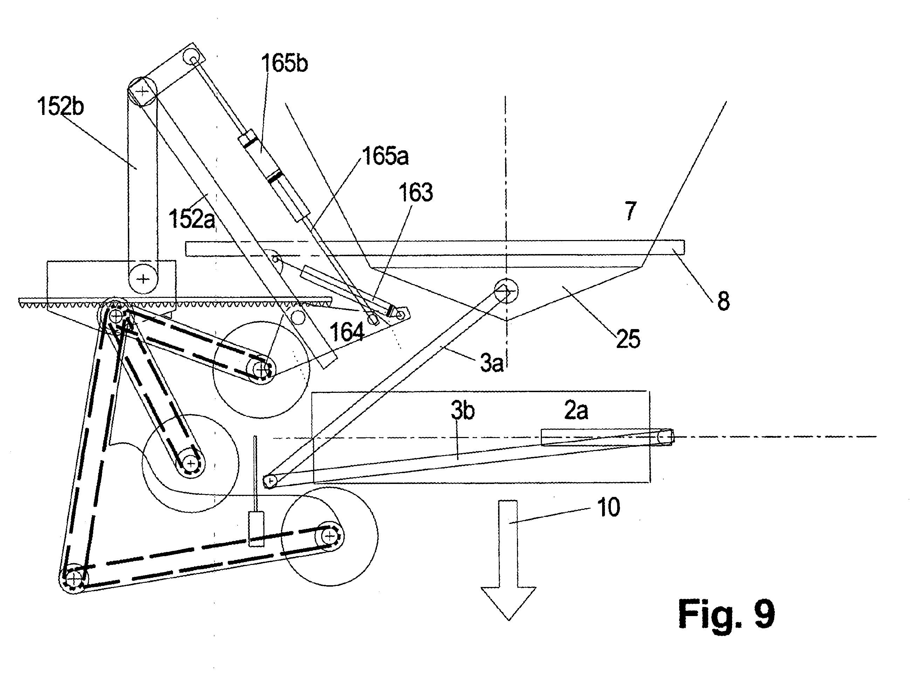

Wie am besten in den Aufsichten der Fig. 8 und 9 zu erkennen, ist in diesem Fall der Freimäher-Auslegerarm 152 nicht direkt am Arbeitsfahrzeug 7, also vorzugsweise dessen Frontrahmen 8, befestigt:

Das Mähgerät umfasst wenigstens einen Mähkopf 2a, vorzugsweise mit einer quer horizontal liegenden, walzenförmigen Mähwelle, welches bei Ausbildung als Frontmähgerät an dem Frontrahmen 8 mittels eines in Querrichtung verschiebbaren Verschiebeschuhs 25 befestigt ist, wobei vorzugsweise der Auslegerarm 3 aus zwei gelenkig miteinander verbundenen Armteilen 3a und 3b besteht.

Der ebenfalls zweiteilige Auslegerarm 152 des Pfosten-Freimähers 120 ist dann vorzugsweise am hinteren der beiden Armteile 3a des Frontmähkopfes 2a befestigt, so dass im normalen Mähbetrieb der Freimäher 120 seitlich vor dem Arbeitsfahrzeug 7 im Einsatz ist und vom Fahrer und Bediener dieses Fahrzeuges gut eingesehen werden kann.

Mittels eines solchen Arbeitsgerätes sind zwei unterschiedliche Verfahrensweisen möglich: Sofern mit wenigen Hindernissen wie Pfosten 22 zu rechnen ist, befindet sich der Pfosten-Freimäher 120 hinter der Arbeitsbreite des Mähkopfes 2a, und liegt auch mit seinem Arbeitsbereich innerhalb dessen Arbeitsbereich.

Wenn die Taststange 12, die vor dem Mähkopf 2a an diesem befestigt ist, in Kontakt mit einem Hindernis wie etwa einem Pfosten 22 gerät, schwenkt der Mähkopf 2a um seinen Befestigungspunkt am Auslegerarm 3 nach hinten und/oder nach innen und umfährt dadurch den Pfosten 22.

Der dahinter fahrende Pfosten-Freimäher 120 erreicht anschließend den Pfosten 22 und ummäht ihn sauber, wobei in der Regel der Mähkopf 2a bereits am Pfosten 22 vorbeigelaufen und wieder in seine normale Mähposition gemäß Fig. 8 zurückgeschwenkt ist.

Bei dieser Vorgehensweise müssen die Mähvorrichtungen 127a,b.. des Pfosten-Freimähers 120 nicht ständig angetrieben werden. Die Antriebe können beispielsweise gestartet werden gesteuert durch das Kontaktsignal der Taststange 12 und damit gekoppelt mit dem Zurückschwenken des Mähkopfes 2a.

Sofern sich die Hindernisse wie Leitpfosten 22 oder andere Pfosten jedoch in geringem Abstand befinden, und vor allem zwischen diesen Pfosten 22 und dem Straßenrand ein relativ großer zu mähender Grünstreifen liegt, können Mähkopf 2a und Freimäher 120 seitlich selbst mit nur geringfügiger seitlicher Überlappung ihrer Arbeitsbereiche eingestellt und während des Mähens belassen werden. Der Streifen seitlich außerhalb des vom Mähkopf 2a permanent gemähten Streifens wird von den dann permanent angetriebenen Mähvorrichtungen 127a,b,... des Pfosten-Freimähers gemäht.

Wie in Fig. 8 angedeutet, kann ein solches Mähgerät auch einen zweiten Mähkopf 2b umfassen, der mittels eines weiteren Auslegerarmes 4 dann in der Regel auf dem nicht dargestellten Heck des Arbeitsfahrzeuges 7 befestigt ist und in Fahrtrichtung hinter dem Pfosten-Freimäher 120 läuft sowie in Querrichtung seitlich außerhalb davon, bei der notwendigen geringfügigen seitlichen Überlappung.

Fig. 9 zeigt die Transportstellung, bei der sowohl der Mähkopf 2a als auch der Pfosten-Freimäher 120 sich in einem vor dem Arbeitsfahrzeug 7 abgelegten Transportposition befinden und damit weitestgehend innerhalb der Breite des Arbeitsfahrzeuges 7.

Dabei ist der vordere Mähkopf 2a etwa parallel zur Querrichtung 19 vor dem Arbeitsfahrzeug 7 auf einer nicht eingezeichneten Ablageschiene des Frontrahmens 8 abgelegt, so dass die Armteile 3a,b des zugehörigen Auslegerarmes 3 im Wesentlichen in Querrichtung verlaufend V-förmig liegen.

Seitlich neben und hinter dem ersten Armteil 3a dieses Auslegerarmes 3 ist der Pfosten-Freimäher 120 soweit als möglich nach innen zum Fahrzeug 7 hin geklappt, und befindet sich dabei in dem etwa keilförmigen Freiraum zwischen dem Armteil 3a und dem Arbeitsfahrzeug 7, und dabei teilweise auch unterhalb dieses Armteiles 3a und/oder dem Frontrahmen 8.

Zu diesem Zweck werden die Armteile des Auslegerarmes 152 des Freimähers 120 soweit als möglich zum Fahrzeug hin geklappt, so dass sich auch der Grundkörper 160 des Freimähers mit der darauf angeordneten vertikalen Schwenkachse 150 für die Mähvorrichtungen 127 von der Seite her an das Arbeitsfahrzeug annähert.

Zuvor wird die dritte Mähvorrichtung 127c in eine Stellung etwa entsprechend der maximal auslenkten Stellung verschwenkt und dort fixiert, so dass sie sich nicht oder möglichst wenig über den Grundkörper 160 und die Zahnstange 159 hinaus seitlich nach außen erstreckt.

Aus dem selben Grund wird der Tragarm 126a der ersten Mährvorrichtung 127a nach vorn so nah wie möglich an die Zahnstange 159 heran geklappt und der Tragarm 127b der zweiten Mähvorrichtung 127 soweit wie möglich nach hinten bzw. unter die Zahnstange heran, und in diesen Lagen fixiert.

Insbesondere Fig. 8 zeigt einerseits den hydraulischen Verstellzylinder 163, der zwischen dem ersten Armteil 152a des Auslegerarmes 152 und dem Aufnahmeteil 164, in dem dieser Auslegerarm schwenkbar gelagert ist, angeordnet ist und das Verschwenken dieses Armteiles 152a bewirkt. Dadurch kann auch das Aufnahmeteil 164 an einer gewünschten beliebigen Stelle des Auslegerarmes 3 befestigt und auch entlang diesem verschoben werden.

Weiterhin zeigt Fig. 8 die Anlaufsicherung in Form eines hydraulischen Sicherheitszylinders 165, der etwa parallel zum ersten Armteil 152a wiederum zwischen Aufnahmeteil 164 und einer Verlängerung des zweiten Armteiles 152b über den Gelenkpunkt zwischen den Armteilen hinaus angeordnet ist, und eine Beschädigung vor allem des Auslegerarmes verhindern soll, falls der gewünschte Funktionsablauf nicht ordnungsgemäß eintritt, beispielsweise weil der Bediener das Arbeitsfahrzeug 7 nicht so steuert, dass das Hindernis wie beabsichtigt auf den Frontbereich der Tastscheibe 130b der zweiten Mähvorrichtung 127b des Freimähers 120 auftrifft.

Dabei kann der Grundkörper 160 des Pfosten-Freimähers 120 tendenziell nach innen oder auch nach außen gedrückt und damit das Armteil 152b gegenüber dem Armteil 152a zwangsweise in beide Schwenkrichtungen verschwenkt werden. Dem soll ein nur begrenzter Widerstand entgegengesetzt werden, nach dessen Überwindung die bewirkte Zwangsauslenkung auch tatsächlich stattfindet, ohne Schäden an dem Pfosten-Freimäher zu verursachen.

Da beide Verschwenkrichtungen möglich sind, ist der Sicherheitszylinder 165 aus zwei Rücken an Rücken gegeneinandergesetzten Hydraulikzylindern erstellt, wobei sich im einen Zylinder 165a der Kolben in der eingefahrenen und im anderen Zylinder 165b der Kolben im ausgefahrenen Zustand befindet. Nach Überwindung des voreingestellten, relativ niedrigen Haltedruckes in den beiden Zylindern 165a,b wird - je nach Belastung des Sicherheitskolbens 165 auf Druck oder Zug - der entsprechende Kolben weiter ein- bzw. weiter ausgefahren.

Fig. 4 zeigt in einer Ansicht von der Seite entlang der Linie IV-IV (und unter Weglassung der dritten Mähvorrichtung 127c aus Übersichtlichkeitsgründen) das Mähgerät der Fig. 8 und 9 im Einsatz.

Der Pfosten-Freimäher 120 liegt mit einer Gleitkufe 167 auf dem Untergrund auf, ist jedoch über einen vertikal wirkenden Entlastungszylinder 168 teilweise vom Gewicht des Freimähers entlastet, welcher mit einem Druckspeicher 169 in Verbindung steht, dessen voreingestellter Haltedruck die Entlastung im gewünschten Maße sicherstellt.

Der Druckspeicher 169 ist hierbei an dem Armteil 152a des Freimäher-Auslegerarmes 152 dargestellt, könnte sich jedoch ebenfalls am Grundkörper 160 des Freimähers 120 befinden, ebenso wie der auf der gemeinsamen Schwenkachse 150 aller Tragarme 126 aufgesetzte gemeinsame Antriebsmotor 170 für den Betrieb der Mähvorrichtungen 127a,b,c, der in der Regel ein Hydraulikmotor ist und über Keilriemen 171, die entlang oder innerhalb der Tragarme verlaufen, die Mähvorrichtungen 127a,b antreiben.

Fig. 4 zeigt auch das Problem der geringen zur Verfügung stehenden Höhe für den Pfosten-Freimäher, da hiermit ja auch die vertikalen Pfosten von Leitplankenanlagen und ähnlichem freigemäht werden sollen, deren Unterkanten sich häufig nur 10-15 cm über dem Untergrund befinden.

Aus diesem Grund werden als Tragarme Profile mit flach liegendem hohlen oder U-förmigen Querschnitt verwendet, die in denjenigen engen Bereichen, in denen sie nicht im Einsatz miteinander kollidieren können, erst nach oben gekröpft sind, und sich ansonsten jedoch alle auf der nach Möglichkeit gleichen, optimal niedrigen Höhe über dem Untergrund, also relativ zur Gleitkufe 167 befinden, so dass lediglich noch die Tastscheiben 130 und die darunter laufenden Mähmittel (Mähfaden, Mähmesser, Mähscheiben) darunter Platz finden.

Im Gegensatz dazu wird der vor dem Freimäher 120 und einer Leitplanke auch auf der Straßenseite der Leitplanke laufende Mähkopf 2a durch eine Abtastwalze 13, die im Mähkopf hinter der Mähwelle 16 montiert ist, in der Höhe reguliert.

### BEZUGSZEICHENLISTE

- 1: Randstreifen-Mähgerät
- 2a,b: Mähkopf (innerer/äußerer)
- 3: Auslegerarm
- 4: Auslegerarm

- 6: Fahrerkabine
- 7: Arbeitsfahrzeug
- 8: Frontrahmen

- 10: Fahrtrichtung
- 11: Versatzschiene
- 12: Taststange
- 16a,b: Mähwelle
- 19: Querrichtung
- 22: Leitpfosten
- 25: Verschiebeschuh
- 120: Pfosten-Freimäher
- 126: Tragarm
- 127: Mähvorrichtung
- 129: Schneidmittel
- 130: Tastscheibe
- 150: vertikale Achse
- 151: Zwischenwinkel
- 152: Auslegerarm
- 154: Zwischenwinkel
- 156: Anschlag
- 157: Taststab
- 158: Leitkurve
- 159: Zahnstange
- 160: Grundkörper
- 161: Ritzel
- 162: Pneumatik- oder Hydraulikzylinder
- 163: Verstellzylinder
- 164: Aufnahmeteil
- 165: Sicherheitszylinder
- 166: Restfläche
- 167: Gleitkufe
- 168: Entlastungszylinder
- 169: Druckspeicher
- 170: Antriebsmotor
- 171: Keilriemen

## Patentansprüche

1. Pfosten-Freimäher (120) zum Freimähen des Bereiches um ein Hindernis, insbesondere einen Pfosten, herum mit
- zwei Tragarmen (126a, b), an deren freien Enden jeweils eine Mähvorrichtung (127a, b) angeordnet ist, wobei
- die Tragarme (126a, b) um je eine vertikale Achse (150a, b) an einem Grundkörper (160) schwenkbar angeordnet sind zwischen einer normalen Mähstellung ohne Kontakt mit einem Hindernis und einer demgegenüber durch das Hindernis ausgelösten verschwenkten Mähstellung,
- einem den Grundkörper (160) tragenden Auslegerarm (152), der am Arbeitsfahrzeug (7) befestigt ist,
- wenigstens einem Erfassungsmittel an wenigstens einer Mähvorrichtung (127),
**dadurch gekennzeichnet, dass**
- die Tragarme (126a, b) in der normalen Mähstellung von ihrer vertikalen Schwenkachse (150) aus schräg oder senkrecht stehend zur Fahrtrichtung nach vorne außen ragen,
- in der normalen Mähstellung die Arbeitsbreiten der Mähvorrichtungen (127a,b) sich in Querrichtung (19) einander überlappen und die weiter innen, näher am Arbeitsfahrzeug (7) laufende Mähvorrichtung (127a) vor der anderen Mähvorrichtung (127b) angeordnet ist und sich die beiden Mähvorrichtungen auch in Fahrtrichtung (10) überlappen,
- eine Anfahrsicherung zwischen Freimäher-Auslegerarm (152) und dessen Aufnahme am Arbeitsfahrzeug (7) vorhanden ist, indem der Auslegerarm (152) verschwenkbar am Arbeitsfahrzeug (7) befestigt ist.

2. Pfosten-Freimäher (120) nach Anspruch 1,
**dadurch gekennzeichnet, dass**
die vertikalen Achsen (150a, b) identisch sind und die Mähvorrichtungen (127a,b) von einem gemeinsamen Antriebsmotor (170), insbesondere einem Hydraulikmotor, angetrieben werden, der auf der gemeinsamen vertikalen Achse (150) positioniert ist.

3. Pfosten-Freimäher (120) nach einem der vorhergehenden Ansprüche,
**dadurch gekennzeichnet, dass**
als Anfahrsicherung ein Sicherheits-Hydraulikzylinder (165) mit voreingestelltem Druckhalteventil als Passivsicherung angeordnet ist, so dass bei Drucküberschreitung des Wertes des Halteventils der gesamte Pfosten-Freimäher (120) entgegen der Fahrtrichtung (10) nach hinten und innen schwenkt.

4. Pfosten-Freimäher (120) nach einem der vorhergehenden Ansprüche,
**dadurch gekennzeichnet, dass**
der Pfosten-Freimäher (120) als Höhen-Führung eine Gleitkufe (167) oder eine Führungsrolle aufweist und insbesondere die Führung, insbesondere die Gleitkufe (167) teilweise vom Gewicht des Pfosten-Freimähers (120) entlastet ist über einen vertikal wirkenden Entlastungszylinder (168) und einen damit verbundenen Druckspeicher (169) mit konstantem, insbesondere einstellbar konstantem, Druck.

5. Pfosten-Freimäher (120) nach einem der vorhergehenden Ansprüche,
**dadurch gekennzeichnet, dass**
- wenigstens eine Mähvorrichtung (127), insbesondere alle Mähvorrichtungen (127a,b,...) in der Aufsicht kreisförmige, um eine vertikale Achse rotierende, Mähvorrichtungen sind und insbesondere das Erfassungsmittel jeweils eine der kreisförmigen Mähvorrichtungen (127a,b,...) zugeordnete Tastscheibe (130a,b,...), insbesondere parallel oberhalb der Mähvorrichtung angeordnet, ist, und/oder insbesondere
- der Tragarm (126) einschließlich der Mähvorrichtung (127) in Fahrtrichtung (10) in eine definierte Schwenkstellung, insbesondere gegen einen Anschlag, vorgespannt ist und
- der Tragarm (126) in der normalen Mähstellung quer zur Fahrtrichtung (10) verläuft, wobei
- jede der wenigstens zwei Mähvorrichtungen (127a,b,...) am freien Ende eines zugeordneten Tragarms (126a,b,...) angeordnet ist, die insbesondere unabhängig voneinander um ihre vertikalen Achsen (150a,b,...) verschwenkbar sind, und/oder insbesondere
- die vertikalen Achsen (150a,b,...) der Tragarme (126a,b,...) identisch sind und insbesondere die beiden Tragarme (126a,b) der ersten und zweiten Mähvorrichtung (127a,b) einteilig, also nicht knickbar, ausgebildet sind.

6. Pfosten-Freimäher (120) nach einem der vorhergehenden Ansprüche,
**dadurch gekennzeichnet, dass**
die weiter innen laufende Mähvorrichtung (127a) gegen einen ersten Anschlag (156a) am Grundkörper (160) des Freimähers (120) vorgespannt ist und der zweite Arm (126b) mittels eines zweiten Anschlag (156b) gegen den ersten Tragarm (126).

7. Pfosten-Freimäher (120) nach einem der vorhergehenden Ansprüche,
**dadurch gekennzeichnet, dass**
- in der normalen Mähstellung der Freiraum zwischen der ersten und zweiten Mähvorrichtung (127a und 127b) geringer ist als die Dicke, insbesondere die kleinste Dicke, des Hindernisses, insbesondere Pfostens (22) , und/oder insbesondere
- in der maximal ausgelenkten Stellung der zweite Tragarm (126b) über einen Anschlag (156c) direkt oder indirekt am Grundkörper (160) des Freimähers (120) anschlägt, und/oder insbesondere
- der Pfosten-Freimäher (120) eine dritte Mähvorrichtung (127c) umfaßt, die weiter außen als die erste und zweite Mähvorrichtung (127a,b) in der normalen Mähstellung angeordnet ist und insbesondere vor der ersten und zweiten Mähvorrichtung (127a,b) positioniert ist, und/oder insbesondere
- die dritte Mähvorrichtung (127c) an einem Tragarm (126c) am freien Ende angeordnet ist, der in der normalen Mähstellung unter einem positiven, von der Fahrtrichtung wegweisenden, Zwischenwinkel (154) von hinten gegen die Mähvorrichtung (127c) strebt und insbesondere gekröpft aber nicht knickbar, ausgebildet ist, und/oder insbesondere
- vom dritten Tragarm (126c) der dritten Mähvorrichtung (127c) aus ein Erfassungsmittel, insbesondere ein Taststab (157), quer nach innen vor der Vorderkante der zweiten Mähvorrichtung (127b) angeordnet ist, der das Verschwenken des Tragarms (126c) um seine Schwenkachse (150c) und/oder der beiden Teile des Tragarmes (126c) zueinander aus dem Wirkbereich der ersten und zweiten Mähvorrichtung (127a,b) heraus nach hinten bewirkt.

8. Pfosten-Freimäher (120) nach einem der vorhergehenden Ansprüche,
**dadurch gekennzeichnet, dass**
- der Antrieb der Mähvorrichtungen insbesondere über Riemenantriebe erfolgt, deren Ritzel auf den Schwenkachsen (150a,b,c,) angeordnet sind und insbesondere in den aus Kastenprofilen oder U-Profilen bestehenden Grundkörpern der Tragarme (126a,b,c) angeordnet sind, und/oder insbesondere
- am vorderen Segment (126c1) des dritten Tragarms (126c) eine Leitkurve (158) auf der Innenseite zum Entlanggleiten des Hindernisses angeordnet ist, die knickfrei an ihrem Ende in die Außenkontur der Tastscheibe (130c) der dritten Mähvorrichtung (127c) übergeht, und/oder insbesondere
- die vorderste Erfassungsvorrichtung, insbesondere der Taststab (157), auch den Antrieb der Mähvorrichtungen (127a,b,c) in Gang setzt.

9. Pfosten-Freimäher (120) nach einem der vorhergehenden Ansprüche,
**dadurch gekennzeichnet, dass**
- in der maximal ausgelenkten Mähstellung des dritten Tragarmes (126c) dessen hinteres Segment (126c2) an dem Freimäher (120) anschlägt und insbesondere in der maximal ausgelenkten Stellung der ersten und zweiten Mähvorrichtungen (127a,b) der Tragarm (126b) der zweiten Mähvorrichtung (127b) gegen die dritte Mähvorrichtung (127c), insbesondere deren hinteres Segment (126c2) des Tragarms (126c), oder gegen den Grundkörper (160) anschlägt und danach, ausgelöst durch diesen Anschlag oder eine Zeitsteuerung beginnend mit dem Kontakt des Taststabes (157) am Hindernis, insbesondere nach einer von der Fahrgeschwindigkeit abhängigen Zeitdauer, der Pfosten-Freimäher wieder seine normale Mähstellung einnimmt, und/oder insbesondere
- auf der Schwenkachse (150c) des dritten Tragarms (126c) ein Ritzel sitzt, welches mittels einer mit einem Hydraulikzylinder angetriebenen Zahnstange (159) zum Zwecke des Verschwenkens der dritten Mähvorrichtung (127c) kämmt, und/oder insbesondere
- der Sicherheits-Hydraulikzylinder (165) aus zwei Rücken an Rücken fluchtend angeordneten Hydraulikzylindern (165a,b) besteht, bei denen der eine mittels eines ersten Druckhalteventils auf Zug und der zweite mittels eines analogen Druckhalteventils auf Druck belastet ist.

10. Pfosten-Freimäher (120) nach einem der vorhergehenden Ansprüche,
**dadurch gekennzeichnet, dass**
- der erste Anschlag (156a) und/oder der Endanschlag für den dritten Tragarm (126c) am Grundkörper (160) für die Zahnstange (159) angeordnet ist, und insbesondere Grundkörper (160) mit Zahnstange (159) im Mähbetrieb in Fahrtrichtung (10) angeordnet sind, und/oder insbesondere
- in der normalen Mähstellung die Außenkante des Arbeitsbereiches des Pfosten-Freimähers (120) mindestens soweit außen liegt wie die Innenkante des Arbeitsbereiches des Pfosten-Freimähers (120), wenn sich dieser gegenüber der Schwenkachse (150) in der am weitesten außen befindlichen Position, also im rechten Winkel zur Fahrtrichtung (10), befindet, und/oder insbesondere
- die in Fahrtrichtung betrachtete Breite des Arbeitsbereiches der Mähvorrichtung (127) so groß gewählt ist, dass der Schwenkwinkel des Freimähers (120) zwischen der normalen Mähposition und der maximalen Auslenkung entgegen der normalen Mähposition durch ein Hindernis mindestens 110°, insbesondere mindestens 130° beträgt, und/oder insbesondere
- der Tragarm (126) in der Aufsicht betrachtet, insbesondere in dem unmittelbar am Mähwerk (127) angrenzenden Bereich, deutlich schmaler, insbesondere wenigstens um den Faktor drei, insbesondere wenigstens um den Faktor fünf, schmaler ausgebildet ist als der Durchmesser des Mähwerkes (127).

11. Pfosten-Freimäher nach einem der vorhergehenden Ansprüche
**dadurch gekennzeichnet, dass**
- Stellmittel zum Einstellen des Querabstandes zwischen dem jeweiligen Mähwerk (127) und der vertikalen Achse, insbesondere durch Einstellen der Schwenkposition des Tragarmes (126) um die vertikale Achse, insbesondere abhängig von dem Erfassungszustand der Erfassungsmittel (130) vorgesehen sind, und/oder insbesondere
- jeder Tragarm (126) einen im Wesentlichen horizontalen Abschnitt aufweist und insbesondere der erste, innerste Tragearm (126c) in seiner gesamten Länge horizontal verläuft, und/oder insbesondere
- in der Aufsicht betrachtet der Tragarm (126a,b), vorzugsweise in Arbeitsrichtung, gerade ist, und/oder insbesondere
- die Vorspannkraft der Tragearm (126a,b oder c) einstellbar ist, und/oder insbesondere
- die Stellmittel ein Getriebe oder eine Kurvenscheibe aufweisen, und/oder insbesondere
- eine Führung zum Einstellen eines vorbestimmten Abstandes des Mähwerkes (127) vom Boden vorhanden ist.

12. Pfosten-Freimäher nach einem der vorhergehenden Ansprüche,
**dadurch gekennzeichnet, dass**
das Mähwerk (127) rotierende, insbesondere horizontal rotierende, Schneidmittel (129) aufweist, vorzugsweise einen Mähfaden, Mähmesser oder eine Mähscheibe.

13. Pfostenfreimäher nach einem der vorhergehenden Ansprüche, mit
- wenigstens einem zusätzlichen ersten Mähkopf (2a), der an einem ersten Auslegerarm (3) befestigt ist,
- wobei dessen Auslegerarm (3) an dem vom Mähkopf (2a) abgewandten Ende an einer Befestigungseinheit (8) insbesondere einen Frontrahmen angeordnet ist, die dem Befestigen an einem Arbeitsfahrzeug (7) dient
**dadurch gekennzeichnet, dass**
- der Pfosten-Freimäher (120) direkt oder indirekt an derselben Befestigungseinheit angeordnet ist wie der Mähkopf (2a), und/oder insbesondere
- der Pfosten-Freimäher (120) an dem freien Ende eines Freimäher-Auslegerarmes (152) angeordnet ist, der in seiner normalen Mähstellung gegenüber der Fahrtrichtung (10) des Arbeitsfahrzeuges (7) bei einem Frontmähgerät (2a) schräg nach vorne ragt und bei einem Heckmähgerät schräg nach hinten ragt.

14. Pfostenfreimäher nach Anspruch 13,
**dadurch gekennzeichnet, dass**
- der Freimäher-Auslegerarm (152) insbesondere gegenüber dem Auslegerarm (3a) des Mähkopfes (2a) an seinem hinteren Ende um eine vertikale Klapp-Achse, insbesondere mittels eines Verstell-Zylinders (163), in der Aufsicht in eine wenigstens definierte Winkelstellung (normale Mähstellung und/oder Transportstellung) verlagerbar ist, und/oder insbesondere
- der Freimäher-Auslegeramt (152) am Verschiebeschuh (25) der Frontschiene (11) oder dem Auslegerarm (3) des ersten Mähkopfes (2a), insbesondere bei einem ersten und zweiten Mähkopf dem des weiter innen und weiter vorne mähenden ersten Mähkopfes (2a), befestigt ist, und/oder insbesondere
- der Freimäher-Auslegerarm (152) auf einem Schlitten angeordnet ist, der gegenüber dem Frontrahmen (8), insbesondere deren Versatzschiene (11) quer zur Arbeitsrichtung (10) verfahrbar und/oder fixierbar ist, und/oder insbesondere
- der Antrieb des Pfosten-Freimähers (120) mit der gleichen Energieart betrieben wird wie der wenigstens eine erste Mähkopf (2a), insbesondere mittels Hydraulikmedium, und die Energiezufuhr für den Pfosten-Freimäher (120) zusammen mit der Energiezufuhr zum wenigstens ersten Mähkopf (2a) zusammen ein- und ausschaltbar ist.

15. Pfostenfreimäher nach einem der Ansprüche 13 bis 14,
**dadurch gekennzeichnet, dass**
- eine zentrale Steuerung für das gesamte Mähgerät einschließlich wenigstens einem ersten Mähkopf (2a) und dem Pfosten-Freimäher (120), vorhanden ist, und einzelne Funktionen, insbesondere die Höheneinstellung, mittels eines gemeinsamen Betätigungselementes gemeinsam betätigt werden kann, und/oder insbesondere
- in der normalen Mähstellung sich die Mähbreite des Pfosten-Freimähers (120) sich - ggf. mit geringfügiger Überlappung in Querrichtung (19) - seitlich an der Außenseite an die Arbeitsbreite des wenigstens einen ersten Mähkopfes (2a) anschließt.

16. Pfostenfreimäher nach einem der Ansprüche 13 bis 15, wobei das Mähgerät einen zweiten zusätzlichen Mähkopf (2b) umfasst der an einem zweiten Auslegerarm (4) befestigt ist und in der normalen Mähstellung sich mit seiner Arbeitsbreite in Querrichtung (19) seitlich - insbesondere ohne Überlappung- außerhalb der Arbeitsbreite des ersten Mähkopfes angeordnet ist
**dadurch gekennzeichnet, dass**
- der Pfosten-Freimäher (120) so angeordnet ist, dass sich dessen Arbeitsbreite in Querrichtung (19) zwischen der Arbeitsbreite des ersten (2a) und zweiten (2b) Mähkopfes - ggf. mit jeweils geringfügiger seitlicher Überlappung - in der normalen Mähstellung befindet, und/oder insbesondere
- das Tastmittel, insbesondere der Taststab (12) eines der Randstreifen-Mähköpfe (2a,b), insbesondere des innen fahrenden Randstreifen-Mähkopfes (2a), den Pfosten-Freimäher (120) steuert, insbesondere bei Kontaktierung eines Hindernisses dessen Mähvorrichtung in Gang setzt und insbesondere nach einer vorgegebenen Zeitdauer wieder still setzt, und/oder insbesondere
- der erste Mähkopf (2a) ein an der Front des Arbeitsfahrzeuges (7) befestigter Front-Mähkopf ist und insbesondere der zweite Mähkopf (2b) ein am oder auf dem Heck des Arbeitsfahrzeuges (7) befestigter Heck-Mähkopf ist.

17. Verfahren zum Mähen eines Randstreifens neben einem Arbeitsfahrzeug (7) mit einem am Arbeitsfahrzeug (7) befestigten Mähgerät, welches
- wenigstens einen ersten Mähkopf (2a) an einem ersten Auslegerarm (3) und
- wenigstens einen zusätzlichen Pfosten-Freimäher (120) gemäß einem der vorhergehenden Ansprüche an einem Freimäher-Tragarm (153) umfasst,
- wobei der Arbeitsbereich des Pfostenfreimähers in Querrichtung innerhalb oder mit geringfügiger seitlicher Überlappung seitlich neben dem Arbeitsbereich des Mähkopfes (2a) liegt,
**dadurch gekennzeichnet, dass**
- im Arbeitseinsatz als normale Mähposition der Querabstand des ersten Mähkopfes (2a) relativ zum Arbeitsfahrzeug (7) vom Bediener manuell eingestellt wird,
- der Querabstand des Pfosten-Freimähers (120) zum ersten Mähkopf (2a) in der normalen Mähposition reproduzierbar und einstellbar automatisch eingenommen wird, und
- als normale Mähposition der Arbeitsbereich des ersten Mähkopfes (2a) unmittelbar innerhalb, also zur Straße hin, der Hindernisse, insbesondere Leitpfosten (22), im Randstreifen als Querabstand eingestellt wird, oder
- im Längsbereich zwischen zwei Hindernissen der vordere Mähkopf (2a) in Querrichtung so positioniert ist, dass er den Mähbereich der dahinter laufenden Pfosten-Freimähvorrichtung (120) mit abdeckt, und
- der vordere Mähkopf (2a) bei Anlaufen an ein Hindernis auf der Innenseite an diesem herumgeführt und das Hindernis durch den nachfolgenden Pfosten-Freimäher (120) automatisch freigemäht wird und
- der vordere Mähkopf (2a) nach außer Eingriff geraten mit dem Hindernis in seine Normalstellung automatisch zurückgeschwenkt wird.

18. Verfahren nach einem der vorhergehenden Verfahrensansprüche,
wobei der Pfosten-Freimäher (120) eine dritte, weiter außen laufende, Mähvorrichtung (127) umfasst,
**dadurch gekennzeichnet, dass**
- der Pfosten-Freimäher (120) mit dem dritten Tastmittel, insbesondere der Tastscheibe (130c), auf der Außenseite des Hindernisses, insbesondere diese Außenseite kontaktierend, entlang gesteuert wird und
- diese dritte Mähvorrichtung (127c) vor Kontaktieren des Hindernisses mit der ernsten oder zweiten Mähvorrichtung (127a,b) in eine deaktivierte Ruheposition, insbesondere vollständig außerhalb des Arbeitsbereiches der ersten und zweiten Mähvorrichtung (127a,b), verbracht und während des Ummähens des Hindernisses durch die erste und zweite Mähvorrichtung (127a,b) belassen wird, und/oder insbesondere
- die Mähvorrichtungen (127a,b,..) des Pfosten-Freimähers (120) erst kurz vor Erreichen eines Hindernisses angetrieben und insbesondere in Mähhöhe gegen den Untergrund abgesenkt werden, und/oder insbesondere
- von der Grundstellung aus die erste und zweite Mähvorrichtung (127a,b) passiv durch den Gegendruck des Hindernisses ausgelenkt werden, die ggf. vorhandene Mähvorrichtung (127c) dagegen durch aktives Verschwenken, insbesondere ausgelöst durch ein Tastmittel, welches vom Hindernis kontaktiert wird.

## Claims

1. A post-edge mower (120) for mowing the area about an obstacle, in particular about a post, comprising:
- two support arms (126a, b), at whose free ends a respective mowing device (127a, b) is disposed, where
- the support arms (126a, b) are pivotably disposed about a respective vertical axis (150a, b) at a base body (160) between a normal mowing position without contact with the obstacle and a mowing position, which is initiated by the obstacle and pivoted relative to the first position and,
- an outrigger arm (152) supporting the base body (160), which support arm is mounted at the utility vehicle (7),
- at least one detection means at least at one mowing device (127), wherein
- the support arms (126a, b) protrude from their vertical pivot axis (150) in the normal mowing position at a slant angle or perpendicular the driving direction in forward and outward direction,
- the operating widths of the mowing devices (127a, b) overlap one another in transversal direction (19) in the normal mowing position, and the mowing device (127a), running further on the inside closer to the utility vehicle (7), is disposed in front of the other mowing device (127b), and the two mowing devices also overlap in driving direction (10),
- a collision safety is provided between the edge mower outrigger arm (152) and its receiver at the utility vehicle (7) by pivotably mounting the outrigger arm (152) at the utility vehicle (7).

2. A post-edge mower (120) according to claim 1, wherein the vertical axes (150a, b) are identical and the mowing devices (127a, b) are driven by a common drive motor (170), in particular by a hydraulic motor, which is positioned on the common vertical axis (150).

3. A post-edge mower (120) according to one of the preceding claims, wherein a hydraulic safety cylinder (165) with a preset pressure retention valve as a passive safety is disposed as a collision safety, so that the entire post-edge mower (120) pivots backward and inward against driving direction (10), when the pressure threshold value of the retention valve is exceeded.

4. A post-edge mower (120) according to one of the preceding claims, wherein the post-edge mower (120) comprises a skid (167) as an elevation guide, or comprises a guide roller, and in particular, the guide, in particular the skid (167), is partially unloaded from the weight of the post-edge mower (120) through a vertically acting unloading cylinder (168) and through a pressure accumulator (169) connected therewith with constant, in particular, adjustable constant pressure.

5. A post-edge mower (120) according to one of the preceding claims, wherein
- at least one mowing device (127), in particular all mowing devices (127a, b, ...), are mowing devices, which are circular in top view and rotate about a vertical axis, and in particular, the detection means is a respective sensing disk (130a, b, ...) associated with the circular mowing devices (127a, b, ...), in particular disposed in parallel above the mowing device, and/or in particular,
- the support arm (126) including the mowing device (127) is preloaded in driving direction (10) into a defined pivot position, in particular preloaded against a stop, and
- the support arm (126) extends transversal to the driving direction (10) in the normal mowing position, where
- each of the at least two mowing devices (127a, b, ...) is disposed at the free end of an associated support arm (126a, b, ...), which mowing devices are in particular pivotable independently from one another about their vertical axes (150a, b,...), and/or in particular,
- the vertical axes (150a, b, ...) of the support arms (126a, b, ...) are identical, and in particular the two support arms (126a, b) of the first and of the second mowing device (127a, b) are integrally configured, thus not foldable.

6. A post-edge mower (120) according to one of the preceding claims, wherein the mowing device (127a), which runs on the further inside, is preloaded against a first stop (156a) at the base body (160) of the edge mower (120), and the second arm (126b) is preloaded against the first support arm (126a) by means of a second stop (156b).

7. A post-edge mower (120) according to one of the preceding claims, wherein
- the free space between the first and the second mowing device (127a, 127b) is smaller in the normal mowing position than the thickness of the obstacle, in particular the lowest thickness of the obstacle, in particular the thickness of the post (22), and/or in particular,
- in the maximally deflected position, the second support arm (126b) contacts the base body (160) of the edge mower (120) through a stop (156c) directly or indirectly, and/or in particular,
- the post-edge mower (120) comprises a third mowing device (127c), which is disposed further outside than the first and the second mowing device (127a, b) in the normal mowing position and which is positioned in particular in front of the first and the second mowing device (127a, b), and/or in particular,
- the third mowing device (127c) is disposed at the free end of a support arm (127c), which support arm extends in the normal mowing position at a positive relative angle (154) pointing away from the driving direction, extends from the rear towards the mowing device (127c) and is configured in particular with an elbow but not foldable, and/or in particular,
- a detection means, in particular a sensing rod (157), extending transversally inward from the third support arm (126c) of the third mowing device (127c), is disposed in front of the forward edge of the second mowing device (127b), which sensing rod causes the backward pivoting of the support arm (126c) about its pivot axis (150c), and/or the backward pivoting of both components of the support arm (126c) relative to one another, out of the effective area of the first and of the second mowing devices (127a, b).

8. A post-edge mower (120) according to one of the preceding claims, wherein
- the driving of the mowing devices is performed in particular through belt drives, whose pulleys are disposed on the pivot axes (150a, b, c), and in particular in the base bodies of the support arms (126a, b, c) comprised of box profiles or U-profiles, and/or in particular,
- a template (158) is disposed on the inside at the front segment (126c1) of the third support arm (126c) for having the obstacle slide along, which template transitions without a kink at its end into the outer contour of the sensing disk (130c) of the third mowing device (127c), and/or in particular
- the most forward detection device, in particular the sensing rod (157), also starts the drive of the mowing devices (127a, b, c).

9. A post-edge mower (120) according to one of the preceding claims, wherein
- the rear segment (126c2) of the third support arm (126c) contacts the edge mower (120) in the maximally deflected mowing position of the third support arm,
and in particular, the support arm (126b) of the second mowing device (127b) contacts the third mowing device (127c), in particular the rear segment (126c2) of its support arm (126c) or the base body (160), in the maximally deflected position of the first and the second mowing devices (127a, b), and thereafter, triggered by the stop or a by timed control, starting with the contact of the sensing rod (157) at the obstacle, in particular after a time period which is a function of the driving velocity, the post-edge mower reverts to its normal mowing position, and/or in particular,
- a sprocket is disposed on the pivot axis (150c) of the third support arm (126c), which sprocket meshes with a gear rack (159) driven by a hydraulic cylinder, in order to pivot the third mowing device (127c), and/or in particular,
- the hydraulic safety cylinder (165) is comprised of two hydraulic cylinders (165a, b) disposed in line back to back, one of the two hydraulic cylinders is tension loaded by means of a first pressure control valve, and the second one is compression loaded by an analogous pressure control valve.

10. A post-edge mower (120) according to one of the preceding claims, wherein
- the first stop (156a) and/or the end stop for the third support arm (126c) is disposed at the base body (160) for the gear rack (159), and in particular, the base body (160) with the gear rack (159) are disposed in driving direction (10) during mowing operation, and/or in particular,
- in the normal mowing position, the outer edge of the operating area of the post-edge mower (120) is at least as far outside as the inner edge of the operating area of the post-edge mower (120), when the post-edge mower is in the most outward position with respect to the pivot axis (150), thus at a right angle relative to the driving direction (10), and/or in particular,
- the width of the operating area of the mowing device (127) viewed in driving direction is sized, so that the pivot angle of the edge mower (120) between the normal mowing position and the maximum deflection from the normal mowing position caused by an obstacle is at least 110°, in particular at least 130°, and/or in particular,
- the support arm (126) viewed in top view, in particular in the area directly adjacent to the mowing device (127), is configured significantly narrower, in particular at least by the factor 3, in particular at least by the factor 5, than the diameter of the mowing device (127).

11. A post-edge mower (120) according to one of the preceding claims, wherein
- the adjustment means for adjusting the transversal distance between the respective mowing device (127) and the vertical axis are provided in particular through adjusting the pivot position of the support arm (126) about the vertical axis, in particular as a function of the detection state of the detection means (130), and/or in particular,
- each support arm (126) comprises a substantially horizontal section, and in particular, the first, inner most support arm (126c) extends horizontally over its entire length, and/or in particular,
- seen in top view, the support arm (126a, b) is straight, preferably in operating direction, and/or in particular,
- the preload force of the support arms (126a, b, c) is adjustable, and/or in particular,
- the adjustment means comprise a transmission and/or a curve disk, and/or in particular,
- a guide for adjusting a predetermined distance of the mowing device (127) from the ground is provided.

12. A post-edge mower (120) according to one of the preceding claims, wherein the mowing device (127) comprises rotating, in particular, horizontally rotating cutting means (129), preferably a mowing line, mowing knives or a mowing disk.

13. A post-edge mower (120) according to one of the preceding claims, comprising
- at least one additional first mowing head (2a), mounted to a first outrigger arm (3), wherein
- its outrigger arm (3) is disposed at its end facing away from the mowing head (2a) at a mounting unit (8), in particular at a front frame, which is used for mounting to a utility vehicle (7), wherein
- the post-edge mower (120) is directly or indirectly disposed at the same mounting unit, as the mowing head (2a), and/or in particular,
- the post-edge mower (120) is disposed at the free end of an edge mower outrigger arm (152), which protrudes forward at a slant angle in its regular mowing position relative to the driving direction (10) of the utility vehicle (7), when a front mowing device (2a) is used, and which protrudes backward at a slant angle in its regular mowing position relative to the driving direction (10) of the utility vehicle (7), when a rear mowing device is used.

14. A post-edge mower according to claim 13, wherein
- the edge mower outrigger arm (152) is movable at its rear end about a vertical flap axis, in particular with respect to the outrigger arm (3a) of the mowing head (2a), in particular by means of an adjustment cylinder (163), in top view, at least into one defined angular position (normal mowing position and/or transport position), and/or in particular,
- the edge mower outrigger arm (152) is mounted in particular at the sliding shoe (25) of the front rail (11) or at the outrigger arm (3) of the first mowing head (2a), in particular when there are first and second mowing heads, it is mounted at the outrigger arm of the mowing head (2a), which mows further inside and further in front, and/or in particular,
- the edge mower outrigger arm (152) is disposed on a slide, which is movable and/or fixable transversal to the operating direction (10) relative to the front frame (8), in particular relative to its offset rail (11), and/or in particular,
- the drive of the post-edge mower (120) is operated with the same type of energy as the at least one first mowing head (2a), in particular by means of a hydraulic medium, and the energy supply for the post-edge mower (120) can be turned on and off together with the energy supply to the at least first mowing head (2a).

15. A post-edge mower according to one of the claims 13 through 14, wherein
- a central control for the entire mowing unit including at least a first mowing head (2a) and the post-edge mower (120) is provided and particular functions, in particular the elevation adjustment, can be jointly actuated by means of a common actuation element, and/or in particular,
- the mowing width of the post-edge mower (120) connects in the normal mowing position laterally at the outside of the operating width of the at least one first mowing head (2a), possibly with a minor overlap in transversal direction (19).

16. A post-edge mower according to one of the claims 13 through 15, wherein
- the mowing unit comprises a second additional mowing head (2b), which is mounted to a second outrigger arm (4) and which is disposed in the normal mowing position with its operating width in transversal direction (19) laterally outside of the operating width of the first mowing head, in particular without overlap , wherein
- the post-edge mower (120) is disposed, so that its operating width is disposed in transversal direction (19) between the operating width of the first mowing head (2a) and operating width of the second mowing head (2b), possibly respectively with minor lateral overlap in the normal mowing position, and/or in particular,
- the sensing means, in particular the sensing rod (12), of one of the edge strip mowing heads (2a, b), in particular of the edge strip mowing head (2a) running on the inside, controls the post-edge mower (120), in particular starts its mowing device when contacting an obstacle, and in particular shuts it down again after a predetermined time interval, and/or in particular,
- the first mowing head (2a) is a front-mowing head, attached to the front of the utility vehicle (7), and in particular, the second mowing head (2b) is a rear-mowing head mounted at or on the rear of the utility vehicle (7).

17. A method for mowing an edge strip adjacent to an operating vehicle (7) through a mowing unit attached to the utility vehicle (7), which mowing unit comprises:
- at least a first mowing head (2a) at a first outrigger arm (3), and
- at least an additional post-edge mower (120) according to one of the preceding claims at a edge mower support arm (153),
- where the operating area of the post-edge mower is disposed in transversal direction within, or with a small lateral overlap, laterally besides the operating area of the mowing head (2a), wherein
- the transversal distance of the first mowing head (2a) relative to the utility vehicle (7) is manually adjusted by the operator during operation as a normal mowing position,
- the transversal distance of the post-edge mower (120) relative to the first mowing head (2a) is automatically assumed in the first mowing position in a reproducible and adjustable manner, and
- the operating area of the first mowing head (2a) is adjusted as a normal operating position directly inside of the obstacles, in particular the guide post (22), thus towards the road, as a transversal distance within the edge strip, or
- the front mowing head (2a) is positioned in transversal direction in the longitudinal portion between two obstacles, so that it also covers the mowing area of the post-edge mower (120), running thereafter, and
- the front mowing head (2a), when contacting an obstacle, is guided about the obstacle on the inside, and edge mowing is automatically performed about the obstacle by the subsequent post-edge mower (120), and
- the front mowing head (2a) is automatically pivoted back into its normal position after it has come out of engagement with the obstacle.

18. A method according to one of the preceding method claims, where the post-edge mower (120) comprises a third mowing device (127c) running further on the outside, wherein
- the post-edge mower (120) is controlled by a third sensing means, in particular by a sensing disk (130c), along the outside of the obstacle, in particular with the sensing disk contacting the outside, and
- the third mowing device (127c) is moved into a deactivated idle position, in particular completely outside of the operating area of the first and of the second mowing device (127a, b), before contacting the obstacle with the first or the second mowing device (127a, b), and the third mowing device is left in the idle position while mowing about the obstacle with the first and the second mowing device (127a, b), and/or in particular,
- the mowing devices (127a, b, ...) of the post-edge mower (120) are only driven and in particular lowered to mowing elevation towards the ground shortly before reaching an obstacle, and/or in particular,
- the first and the second mowing devices (127a, b) are passively deflected from their base positions through the contact pressure of the obstacle, however, the optionally provided mowing device (127c) is deflected through active pivoting, in particular initiated by a sensing means, which is contacted by the obstacle.

## Revendications

1. Faucheuse contournante (120) pour faucher la zone autour d'un obstacle en particulier d'un poteau, comprenant
- deux bras porteurs (126a) aux extrémités libres desquels est disposé un dispositif de fauche (127a, b),
- les deux bras porteurs (126a, b) étant disposés autour d'un axe vertical (respectif (150a, b) de manière pivotante sur un corps de base (160) entre une position normale de fauche sans contact avec un obstacle et une position de fauche basculée déclenchée par l'obstacle,
un bras de portée (152) portant le corps de base (160), lequel est fixé sur le véhicule de travail (7),
- au moins un moyen de saisie sur au moins un dispositif de fauche (127),
**caractérisée en ce que**
- les bras porteurs (126a, b) dépassent à l'extérieur vers l'avant dans la position normale de fauche depuis son axe verticale de pivotement (150) en oblique ou perpendiculairement à la direction de déplacement,
- dans la position normale de fauche, les largeurs de travail des dispositifs de fauche (127a, b) se chevauchent mutuellement dans la direction transversale (19) et le dispositif de fauche (127a) tourne plus loin à l'intérieur plus près du véhicule de travail (7) est disposé devant l'autre dispositif de fauche (127b) et les deux dispositifs de fauche se chevauchent également dans la direction de déplacement (10),
- une sécurité anti-démarrage étant prévue entre le bras de portée de fauche (152) et son logement sur le véhicule de travail (7) dans lequel le bras de portée (152) est fixé en pivotement sur le véhicule de travail (7).

2. Faucheuse contournante (120) selon la revendication 1, **caractérisée en ce que** les axes verticaux (150a, b) sont identiques et les dispositifs de fauche (127a, b) sont entraînés par un moteur d'entraînement commun (170) en particulier par un moteur hydraulique qui est positionné sur l'axe vertical commun (150).

3. Faucheuse contournante (120) selon l'une des revendications précédentes, **caractérisée en ce qu'**en tant que sécurité d'effacement, un cylindre hydraulique de sécurité (165) avec une soupape d'arrêt de pression est disposé en tant que sécurité passive de sorte qu'en cas de dépassement de pression de la valeur de la soupape d'arrêt de pression, l'ensemble de la faucheuse contournante (120) est pivoté vers l'arrière et l'intérieur dans la direction contraire de déplacement (10).

4. Faucheuse contournante (120) selon l'une des revendications précédentes, **caractérisée en ce que** la faucheuse contournante (120) présente pour le guidage en hauteur un patin de guidage (167) ou un galet de guidage et en particulier le guide, en particulier le patin de guidage (167) est délesté partiellement du poids de la faucheuse contournante (120) par un cylindre de délestage à action verticale (168) avec un accumulateur de pression (169) relié à ce dernier avec une pression constante en particulier réglable.

5. Faucheuse contournante (120) selon l'une des revendications précédentes, **caractérisée en ce qu'**
- au moins un dispositif de fauche (127), en particulier tous les dispositifs de fauche (127a, b...) sont en vue de dessus des dispositifs de fauche circulaires tournant autour d'un axe vertical et en particulier le moyen de saisie est un disque de palpage (130a, b...) associé aux dispositifs de fauche circulaires (127a, b) disposé en particulier parallèlement au-dessus du dispositif de fauche, et/ou
le bras porteur (126) et le dispositif de fauche (127) sont précontraints dans la direction de déplacement (10 dans une position de pivotement définie, en particulier contre une butée et
- le bras porteur (126) s'étend transversalement à la direction de déplacement (10) dans la position normale de fauche,
- au moins deux dispositifs de fauche (127a, b,...) sont disposés sur l'extrémité libre des bras porteurs respectifs associés (126a, b,...), qui sont pivotants autour de son axe vertical (150a, b,...) en particulier indépendants les uns des autres,
- les axes verticaux (150a, b,...) des bras porteurs (126a, b,...) sont identiques et en particulier les deux bras porteurs (126a, b, ...) des premier et second dispositifs de fauche (127a, b) sont réalisés d'une seule pièce et ne peuvent donc pas subir de flambage.

6. Faucheuse contournante (120) selon l'une des revendications précédentes, **caractérisée en ce que** le dispositif de fauche (127a) tournant plus loin à l'intérieur est précontraint contre une première butée (156a) sur le corps de base (160) de la faucheuse contournante (120) et le second bras (126b) est précontraint au moyen de la seconde butée (156b) contre le premier bras porteur (126).

7. Faucheuse contournante (120) selon l'une des revendications précédentes, **caractérisée en ce que**
- dans la position normale de fauche, l'espace libre entre le premier et le second dispositif de fauche (127a et 127b) est inférieur à l'épaisseur en particulier la plus petite épaisseur de l'obstacle, en particulier des poteaux (22) et ou en particulier dans la position étendue maximale, le second bras porteur (126b) vient en butée directement ou indirectement (par une butée (156c) contre le corps de base (160) de la faucheuse contournante (120), et/ou en particulier
- la faucheuse contournante (120) comprend un troisième dispositif de fauche (127c), qui est disposé plus loin à l'extérieur que le premier et le second dispositif de fauche (127s, b) dans la position normale de fauche et en particulier est positionné avant le premier et le second dispositif (127a, b) et/ ou en particulier
- le troisième dispositif de fauche (127c) est disposé sur un bras porteur (126c) qui s'étend de l'arrière en direction du dispositif de fauche (127c) dans la position normale de fauche dans un angle intermédiaire positif (154) détourné de la direction de déplacement et en particulier est réalisé coudé mais sans flambage et/ou en particulier
- depuis le troisième bras porteur (126c) du troisième dispositif de fauche (127c), un moyen de saisie, en particulier une barre de palpage (157), est disposé transversalement vers l'arrière devant le bord avant du second dispositif de fauche (127b)et provoque vers l'arrière le pivotement du bras porteur (126c) autour de son axe de basculement (150c) et/ou des deux parties du bras porteur (126c) l'une par rapport à l'autre en sortant de la zone d'action du premier et du second dispositif de fauche (127a, b) .

8. Faucheuse contournante (120) selon l'une des revendications précédentes, **caractérisée en ce que**
- l'entraînement des dispositifs de fauche s'effectue en particulier par des entraînements à courroie dont les pignons sont disposés sur les axes de pivotement (150a, b, c) et sont disposés en particulier dans les corps de base des bras porteurs (126a, b, c), qui se composent de profilés en caisson ou de profilé en U, et/ou en particulier
- il est disposé sur le segment avant (126c1) du troisième bras porteur (126c), une came de guidage (158) sur la face intérieure pour le contournement de l'obstacle, qui se poursuit sans flambage à une extrémité par le contour externe du disque de palpage (130c) du troisième dispositif de fauche (127c) et/ou en particulier
- le dispositif de saisie le plus en avant, en particulier la barre de palpage (157) met en route également l'entraînement des dispositifs de fauche (127a, b, c).

9. Faucheuse contournante (120) selon l'une des revendications précédentes, **caractérisée en ce que**
- dans la position de fauche déployée au maximum du troisième bras porteur (126c), son segment arrière (126c2) vient en butée contre la faucheuse (120) et en particulier dans la position déployée au maximum du premier et du second dispositif de fauche (127a, b), le bras porteur (126b) du second dispositif de fauche (127b) vient en butée contre le troisième dispositif de fauche (127c), en particulier son segment arrière (126c2) du bras porteur (126c) ou contre le corps de base (160), et ensuite déclenché par cette butée ou une commande temporelle commençant avec le contact de la barre de palpage (157) sur l'obstacle, en particulier après une durée dépendant de la vitesse de marche, la faucheuse contournante reprend sa position normale de fauche et/ou en particulier
- sur l'axe pivotant (150c) du troisième bras porteur (126c) repose un pignon qui entre en prise au moyen d'une crémaillère (159) entraînée par un cylindre hydraulique en vue du pivotement du troisième dispositif de fauche (127c), et/ou en particulier
- le cylindre hydraulique de sécurité (165) se compose de deux cylindres hydrauliques (165a, b) alignés dos à dos, dont l'un est sollicité en traction au moyen d'une première soupape d'arrêt de pression et le second en pression au moyen d'une seconde soupape d'arrêt de pression analogue.

10. Faucheuse contournante (120) selon l'une des revendications précédentes, **caractérisée en ce que**
- la première butée (156a) et/ou la butée finale pour le troisième bras porteur (126c) est disposé sur le corps de base (160) pour la crémaillère (159) et en particulier des corps de base (160) avec crémaillère (159) sont disposé en mode de fauche dans la direction de déplacement (10) et/ou en particulier
-- dans la position normale de fauche, le bord externe de la zone de travail de la fauche contournante (120) se trouve au moins aussi loin à l'extérieur que le bord interne de la zone de travail de la fauche contournante (120) quand celui-ci se trouve par rapport à l'axe pivotant (150) dans la position la plus à l'extérieur donc en angle droit à la direction de déplacement (10) et/ou en particulier
- la largeur observée dans la direction de déplacement, de la zone de travail du dispositif de fauche (127) est choisie suffisamment grande pour que l'angle de pivotement de la faucheuse contournante (120) entre la position normale de fauche et l'extension maximale par un obstacle par rapport à la position normale de fauche s'élève à au moins 110° en particulier au moins 130°, et/ou en particulier
- le bras porteur (126) observé en vue de dessus, est réalisé en particulier dans la zone directement attenante sur l'outil de fauche (127) sensiblement plus étroit, en particulier plus étroit d'au moins le facteur trois en particulier au moins du facteur cinq que le diamètre de l'outil de fauche (127).

11. Faucheuse contournante selon l'une des revendications précédentes, **caractérisée en ce que**
- il est prévu des moyens de réglage pour le réglage de la distance transversale entre l'outil de fauche respectif (127) et l'axe vertical, en particulier par réglage de la position basculante du bras porteur (126) autour de l'axe vertical, en particulier en fonction de l'était de saisie des moyens de saisie (130), et/ou
- chaque bras porteur (126) présente une section sensiblement horizontale et en particulier le premier bras porteur le plus à l'intérieur (126c) s'étend horizontal sur l'ensemble de sa longueur et/ou en particulier
- eu vue de dessus, le bras porteur (126a, b) est rectiligne de préférence dans la direction de travail et/ou en particulier
- la force de précontrainte des bras porteurs (126a, b, ou c) est réglable et/ou particulier
- les moyens de réglage présentent un engrenage ou un disque à came et/ou en particulier
- un guide est prévu pour le réglage d'une distance prédéterminée entre l'outil de fauche (127) et le sol.

12. Faucheuse contournante selon l'une des revendications précédentes, **caractérisé en ce que** l'outil de fauche (127) présente des moyens de coupe (129) rotatifs, en particulier rotatifs horizontalement, de préférence un fil de fauche, des lames de fauche ou un disque de fauche.

13. Faucheuse contournante selon l'une des revendications précédentes avec
- au moins une première tête de fauche supplémentaire (2a) qui est fixée sur un premier bras de protée (3),
- dont le bras de portée (3) est disposé sur l'extrémité détournée de la tête de fauche (2a) sur une unité de fixation (8), en particulier un cadre frontal, laquelle sert à la fixation sur un véhicule de travail (7),
**caractérisée en ce que**
- la faucheuse contournante (120) disposée directement ou indirectement sur la même unité de fixation telle que la tête de fauche (2a) et/ou en particulier,
- la faucheuse contournante (120) est disposée sur l'extrémité libre d'un bras de portée de faucheuse (152) qui dans sa position normale de fauche, dépasse obliquement vers l'avant par rapport à la direction de déplacement (10) pour u appareil de fauche frontal et obliquement vers l'arrière pour un appareil de fauche arrière.

14. Faucheuse contournante selon la revendication 13,
**caractérisée en ce que**
- le bras de portée (152) de la faucheuse peut être décalé en particulier par rapport au bras de portée (3a) de la tête de fauche (2a) sur son extrémité arrière autour d'un axe verticale de repli en particulier d'un cylindre de réglage (163) en vue de dessus dans une position angulaire au moins définie (position normale de fauche et/ou de transport et/ou en particulier
- le bras de portée (152) de la faucheuse est fixé sur le patin de déplacement (25) du rail avant (11) ou sur le bras de porté (3) de la première tête de fauche (2a), en particulier dans le cas d'une première et d'une seconde tête de fauche, sur la première tête de fauche (2a) fauchant davantage à l'intérieur et davantage à l'avant, et/ou en particulier
- le bras de portée (152) de la faucheuse est disposé sur un chariot qui peut être déplacé ou fixé par rapport au cadre avant (8) en particulier son rail de déport (11) transversalement à la direction de travail (10) et/ou en particulier
- l'entraînement de la faucheuse contournante (120) est entraîné avec le même type d'énergie qu'au moins la première tête de fauche (2a), en particulier au moyen d'un fluide hydraulique et **en ce que** l'amenée d'énergie pour la faucheuse contournante (120) peut être mise en service ou hors service ensemble avec l'apport d'énergie à a moins une première tête de fauche (2a).

15. Faucheuse contournante selon l'une des revendications 13 à 14, **caractérisée en ce qu'**
- une commande centrale est prévue pour l'ensemble de l'appareil de fauche y compris au moins une première tête de fauche (2a) et la faucheuse contournante (120) et des fonctions individuelles, en particulier le réglage en hauteur peut être actionné au moyen d'un élément d'actionnement commun et/ou en particulier
- dans la position normale de fauche, la largeur de fauche de la faucheuse contournante (120) - éventuellement avec un léger chevauchement dans la direction transversale (19) - se poursuit latéralement sur la face externe par la largeur de travail au moins de la première tête de fauche (2a).

16. Faucheuse contournante selon l'une des revendications 13 à 15, l'appareil de fauche comprenant une seconde tête de fauche supplémentaire (2b) qui est fixée sur un second bras de portée (4) et qui en position normale de fauche avec sa largeur de travail dans la direction transversale (19) est disposé latéralement - en particulier sans chevauchement - à l'extérieur de la largeur de travail de la première tête de fauche,
**caractérisée en ce que**
- la faucheuse contournante (120) est disposée de sorte que sa largeur de travail se trouve en position normale de fauche dans la direction transversale (19) entre la largeur de travail de la première tête de fauche (2a) et de la seconde tête de fauche (2b) - éventuellement avec un léger chevauchement latéral respectif -, et/ou en particulier
- le moyen de palpage, en particulier en particulier la barre de palpage (12) d'une des têtes de fauche d'accotement (2a, b) en particulier de la tête de fauche d'accotement (2a) avançant à l'intérieur, commande la faucheuse contournante (120) en particulier en cas de contact avec un obstacle déclenche le dispositif de fauche et en particulier après une certaine durée déterminée l'immobilise à nouveau et/ou en particulier
- la première tête de fauche (2a) est une tête de fauche frontale fixée à l'avant du véhicule de travail (7) et en particulier la seconde tête de fauche (2b) est une tête de fauche arrière fixée à ou sur l'arrière du véhicule de travail (7).

17. Procédé pour le fauchage d'un accotement à côté d'un véhicule de travail (7) avec au moins un appareil de fauche fixé sur le véhicule de travail (7), lequel comprend
- au moins une première tête de fauche (2a) sur un premier bras de portée (3) et
- au moins une faucheuse contournante (120) supplémentaire selon l'une des revendications précédentes sur un bras porteur de faucheuse (153),
- la zone travail de la faucheuse contournante se trouvant dans la direction transversale à l'intérieur ou avec un léger chevauchement latéral latéralement à côté de la zone de travail de la tête de fauche (2a).
**caractérisé en ce qu'**
- en mode de travail dans la position normale de fauche, l'écart latéral de la première tête de fauche (2a) par rapport au véhicule de travail (7) est réglé manuellement par l'utilisateur,
- l'écart transversal entre la faucheuse contournante (120) et la première tête de fauche (2a) dans la position normale de fauche est reproductible et est adopté automatiquement de manière réglable
- en tant que position normale de fauche, la zone de travail de la première tête de fauche (2a) est réglée dans l'accotement en tant qu'écart latéral directement à l'intérieur, donc en direction de la route, des obstacles, en particulier des poteaux (22), ou
- dans la zone longitudinale entre deux obstacles, la tête avant de fauche (2a) est positionnée dans la direction transversale de sorte qu'il recouvre la zone de fauche du dispositif de fauche contournant (120) suivant derrière et
- la tête de fauche avant (2a) est guidée lors d'une rencontre avec un obstacle sur la face interne en le contournant et l'obstacle est automatiquement fauché par la faucheuse contournante (120) suivante et
- la tête de fauche avant (2a) est rebasculé automatiquement dans sa position normale après un désengagement avec l'obstacle.

18. Procédé selon l'une des revendications de procédé précédentes, la faucheuse contournante (120) comprenant un troisième dispositif de fauche (127) tournant davantage à l'extérieur,
**caractérisé en ce que**
- la faucheuse contournante (120) est commandée par le troisième moyen de palpage, en particulier un disque palpeur (130c) le long de la face externe de l'obstacle, en particulier par contact avec cette face externe, et
- ce troisième dispositif de fauche (127c) est dans une position de repos désactivée avant l'entrée en contact de l'obstacle avec le premier ou second dispositif de fauche (127a, b), en particulier complètement en dehors de la zone de travail du premier et du second dispositif de fauche (127a, b) et est laissé dans cette position pendant le fauchage par contournement de l'obstacle par le premier et le second dispositif de fauche (127a, b) et/ou en particulier
- les dispositifs de fauche (127a, b,...) de la faucheuse contournante (120) ne sont entraînés que juste avant l'atteinte d'un obstacle et en particulier sont abaissé à la hauteur de fauche contre le sol, et/ou en particulier
- depuis la position de base, le premier et le second dispositif de fauche (127a, b) sont déployés de manière passive par la contre-pression de l'obstacle, le dispositif de fauche éventuellement existant (127c) est déployé en revanche par pivotement actif, en particulier déclenché par un moyen palpeur, qui entre en contact avec l'obstacle.
